# EUROPEAN PATENT SPECIFICATION

(11) **EP 3 939 135 B1**
(45) Date of publication and mention of the grant of the patent: **04.06.2025**
(21) Application number: 20872281.9
(22) Date of filing: 29.09.2020
(51) Int. Cl.: H02G 9/06, H02G 3/04, H02G 9/02, H02G 3/34, H02G 9/08, H02G 3/03, H02G 3/06, H02G 3/00

(54) **A CABLE TROUGH SYSTEM**
KABELRINNENSYSTEM
SYSTÈME DE CHEMIN DE CÂBLES

(30) Priority: 30.09.2019 SG 10201909129R
(43) Date of publication of application: 19.01.2022
(73) Proprietor: YU YEE ENGINEERING PTE LTD, Singapore S729356 (SG)
(72) Inventor: TOH, Thiam Seah, Victor, Singapore S129070 (SG)
(74) Representative: Lichtnecker, Markus Christoph
(86) International application number: PCT/SG2020/050549
(87) International publication number: WO 2021/066745

(56) References cited:
- EP-A2- 2 571 122
- EP-B1- 0 862 253
- JP-A- 2018 182 980
- JP-A- H05 236 628
- JP-A- H05 236 628
- JP-A- H10 164 723
- JP-A- S5 743 514
- KR-B1- 100 662 079
- ANONYMOUS: "Fire Protection Systems", BSS CATALOGUE 2016, 1 July 2016 (2016-07-01), Menden, Germany, pages 1 - 408, XP055538346, Retrieved from the Internet <URL:https://obo-bettermann.com/documents/Katalog_BSS_en_2016.pdf> [retrieved on 20190104]

## Description

### Technical Field

Aspects of the present invention relate to Flame Retardant Fibre Reinforced Plastic (FR-FRP) cable troughs configured for housing high voltage power transmission cables in cable tunnels.

### Background

Singapore and other countries have constructed underground transmission cable tunnels to supply electricity, freeing the ground above for road traffic and architectural space, and preventing dangerous accidental contact associated with overhead power lines. Underground power transmission cable tunnels may reside many metres, e.g., up to 60 metres, below ground level to avoid underground train systems, expressways, and drainage pipes. For fire safety and ease of access / maintenance, high voltage power cables are compartmentalised within cable troughs at elevated levels in the cable tunnels, and are typically affixed to the cable tunnel walls with supports and/or trough racks. Inside vertical shafts leading into the cable tunnels, power cables are also housed in cable troughs. It is important that cable troughs and key portions of an entire cable trough system can be easily and quickly installed and maintained. For high voltage cables installed in cable tunnels, fires or explosions associated with the high voltage cables can occur; hence, it is important that cable troughs in which high voltage cables reside can appropriately withstand possible fires or explosions. Unfortunately, existing cable trough structures and cable trough systems fall short with respect to these requirements. A need exists for cable troughs and cable trough systems that can be easily and quickly installed and maintained in cable tunnels, and which provide superior fire and explosion safety.

JP H05 236628 A discloses a cable trough system, with a single cuboid member. A plurality of top bracket and bottom bracket pairs is not disclosed.

EP 2 571 122 A2 discloses a joint in order to accommodate for thermal expansion. The joints are not designed to undergo explosive type of disengagement.

JP 857 43514 A shows a support for cooling pipes.

"Fire Protection Systems", BSS Catalogue 2016, 1 July 2016 (2016-07-01), pages 1-408, XP055538346, teaches the use of bandages for cable bundles or with ducts that are without cover to prevent fire spread. It does, however, not teach the application of water resistant and flame resistant material to covered cuboids and their joints.

### Summary

Aspects of the present disclosure are directed to cable trough systems comprising a set of cable troughs (at least 1 cable trough) suitable for carrying at least portions of power cables (e.g., particularly high voltage power cables). Cable trough systems in accordance with embodiments of the present disclosure include particular types of cable troughs and/or cable trough elements or structures that facilitate ease of cable trough installation and maintenance, and which provide effective or highly effective structural resiliency and safety with respect to fires and explosions that can occur in association with the power cables that reside therein. With respect to the power cables installed in cable tunnels, it is important that any fire or explosion event that occurs where the power cables are installed (e.g., within the physical structures that house the power cables) should be contained or confined at a small localized spatial region or location with minimum impact to the surrounding assets and tunnel. As cables carried by cable troughs can be damaged or rendered inoperative due to fire and/or explosion event, a cable trough and/or cable trough system that includes one or more types of Flame Retardant materials, such as a Flame Retardant Fibre Reinforced Plastic (FR-FRP) material, is desired. For a flame retardant cable trough, cable trough assembly, or cable trough system, such as an FR-FRP trough or a cable trough system that includes a set of FR-FRP troughs or FR-FRP trough assemblies, two significant or important safety hazards to consider include: (a) flame retardancy of the cable trough, which can be aided by material properties of portions of the trough, trough assembly, and/or trough system, e.g., which can include trough wrapping materials; and (b) power arc and explosion resiliency of the cable trough, which can be aided by mechanical properties of the assembled trough, trough assembly, and/or trough system, e.g., which can include trough wrapping materials. In several embodiments, the major components of a cable trough or cable trough assembly that can form or which reside in a cable trough system include at least some of:
(1) top cover or top casing (which can be referred to as a top trough);
(2) bottom cover or bottom casing (which can be referred to as a bottom trough);
(3) H-clip or panel edge clip;
(4) top splice plate or top bracket;
(5) bottom splice plate or bottom bracket;
(6) pipe / cooling pipe support (which can simply be referred to as a support);
(7) guide plate or guiding element;
(8) cable spacer;
(9) sacrificing or sacrificial shield or protective shield;
(10) explosive force absorbent / resilient / resistant bands or belts, which typically include or are made of polymer material(s), such as a set of Aramid / Kevlar^{®} fibre bands and/or belts;
(11) a set of fasteners associated with or corresponding to the belt(s), such as buckles;
(12) a set of cushioning components or packers;
(13) a set of explosive force absorbent / resilient / resistant wraps, which typically include or are made of polymer material(s), such as aramid wraps or thermal-resistant sheet(s);
(14) a set of water resistant / waterproof (WR/WP) and/or Flame Retardant (FR) wraps or sheets (WR/WP-FR wraps or sheets), which can include fibres and/or plastic(s) / polymer(s), such as a set of polymer coated fiberglass wraps; and
(15) a retaining structure such as at least one bar and a corresponding set of nuts and bolts for retaining or securing the WR/WP-FR wrap(s).
where such numbers (1) - (15) can be present in various FIGs. referred to herein, and like or analogous element numbers associated with different types of troughs or trough structures or components thereof indicate like or analogous types of structures. Element numbers (1) through (9) can include or be made of Flame Retardant Fibre Reinforced Plastic (FR-FRP) material(s), and/or Flame Retardant High Performance Polymer (FR-HPP) material(s), depending upon embodiment details.

According to one aspect of the present disclosure, a cable trough system comprises a first plurality of cuboid members (e.g., elongate cuboid members), each comprising a top casing and a bottom casing joined to form an elongated body encompassing a hollow cavity that is accessible from a front opening and a back opening at a front end and a back end of the cuboid member, respectively. Each of the first plurality of cuboid members is coupled or connected in tandem or series such that a back, rearward, or rear opening of one cuboid member resides adjacent to a front or forward opening of a next cuboid member at an interface or joint where two adjacent cuboid members are coupled. The system can include a plurality of top bracket and bottom bracket pairs. For each such pair, the top bracket and bottom bracket can respectively be secured or fastened to the joint where edges of the top casings and edges of the bottom casing of two adjacent cuboid members meet. The system can include a plurality of belts and corresponding buckles or buckle assemblies. Each belt is slidably engageable with its corresponding buckle or buckle assembly. Each belt comprises a fabric and/or explosive force absorbent / resistant band, such as an explosive force absorbent / resistant polymer fiber band, e.g., a band that includes or is made of Kevlar^{®} band or ultra high molecular weight polyethylene (UHMWPE) fiber / UHMWPE fiber-reinforced cloth, having one end engaged to its corresponding buckle and another end insertable to the buckle. Each buckle or buckle assembly includes an outer frame carrying one or more crossbars to catch against the band for strapping and securing the belt around the elongate body of a cuboid member and securing the top casing to the bottom casing thereof. It is important to note that each buckle or buckle assembly is configured to allow its corresponding belt or band to slide out of the buckle or buckle assembly a limited or acceptable target distance permitting at least some upward lifting of the top casing of a cuboid member away from the bottom casing, thereby creating or enabling the creation of a gap for discharging increased air pressure within the hollow cavity in the occurrence of a fire or explosive incident within the hollow cavity when the increased air pressure reaches or exceeds a predetermined level, threshold, or value.

A crossbar and/or outer frame of each buckle or buckle assembly can include knurling, knurled structures, and/or protrusions to control an amount of friction imposed by the buckle or buckle assembly against the belt corresponding thereto and react or progressively react against the belt sliding out of the buckle in response to increased air pressure. The system can further comprise, for one or more belts strapped around the cuboid member, at least one cushioning component, element, structure, or "packer" disposed between the top casing and part of the belt strapping around the cuboid member for partially absorbing an impact caused by increased air pressure.

The top casing and/or bottom casing of each cuboid member can be substantially U-shaped to provide a planar or generally planar panel coupled to a first and a second elongate side respectively folded into a first and a second vertically extending sidewall. The first sidewall has a greater spatial extent along the vertical axis than the second sidewall. Each sidewall is coupled to or terminates at an elongated edge running lengthwise along the cuboid member. The elongated edge of each of the first sidewall and the second sidewall of the top casing can be structured to respectively couple to the elongate edge of the second sidewall and first sidewall of the bottom casing to form the cuboid member.

The system can additionally comprise a pair of panel edge clips or H-clips for coupling the elongate edges of the top casing to the elongate edges of the bottom casing. In several embodiments, the H-clip comprises a strip or strip element running lengthwise corresponding to the elongate edge of the top casing and/or bottom casing defining a top groove and a bottom groove for separately accommodating the elongate edge of the coupled top and bottom casings.

The system can further comprise multiple guiding or guide elements spaced along and arranged in pairs on the opposing sidewalls of the bottom casing. Each guiding element comprises a pair of opposing arms stretching upwardly away from the sidewalls of the bottom casing with one of the arms affixed on external surface of the sidewall and another arm mounted on internal surface of the sidewall. Each pair of the opposing arms creates a slot in which one of the sidewalls of the top casing is insertable such that the pair of opposing arms is configured to guide the top casing to recouple with the bottom casing after the top casing shifts away from the bottom casing in response to increased air pressure (e.g., because of an explosion event). According to additional embodiments, the opposing arms of the guiding elements outstretch the H-clip in length about the vertical axis. Each pair of guiding elements can be oriented or wrapped towards or against the cuboid member by one of the belts.

In still further embodiments, for two adjacent cuboid members, the pair of top and bottom brackets fastened to the joint stretches over the edges of two adjacent cuboid members, concealing or overlaying a spatial gap or any spatial gap (e.g., a planar or longitudinal / lengthwise gap) between the two adjacent cuboid members.

The system can also comprise a at least one support, e.g., a plurality of supports, positioned within the hollow cavity of each cuboid member. Each support comprises a substantially rigid platform, bar, or slat extending across at least portions of the cavity, for instance, from one sidewall toward or to another sidewall of the bottom casing and shaped for carrying a set of pipes such as cooling pipes running within the cavity along the connected cuboid members and separating the cooling pipes from one or more cables running underneath the support (and possibly or typically separating the cooling pipes from each other). In several embodiments, the support comprises an n-shaped member having a slat extending laterally across the cuboid member inner cavity, and two downwardly reaching legs. For further embodiments, the legs are respectively seated in or anchored to the top groove of the H-clips. Hence, the top groove of the H-clip in such embodiments has a cross-sectional width greater than the bottom groove of the H-clip for receiving the elongate edge of the top casing as well as the leg of the support. In certain embodiments, each support carries one or more indentations or recesses on its slat for positioning or securing the cooling pipe(s) on the support. In some embodiments, each leg terminates with two parallel prongs with a more outwardly located prong being insertable into a top groove of an H-clip for anchoring the support onto the H-clip.

For multiple embodiments, the system includes a protective sheet or shield placed within portions of a cuboid member assembly's inner cavity, overlaying the joint of two adjacent cuboid members at each bottom casing. The protective sheet or shield is configured for at least partially absorbing a force or impact directed toward the joint due to the aforementioned increased air pressure. The protective sheet or shield can comprise two L-shaped frames or frame members. Each frame has a vertical segment and a horizontal segment respectively overlaying onto the sidewall and the planar panel of portions of the bottom casings around the joint of the two adjacent cuboid members. More particularly, the two L-shaped frames mate at the edge of their horizontal segments to form the protective sheet, thereby forming a protective trough joint shield / sheet.

In various embodiments, the top casing of each cuboid member or at least some cuboid members can be detachable, e.g., individually, from the bottom casing, permitting easy and rapid access to the cuboid member's inner cavity upon removal of the top bracket and belts.

In multiple embodiments, each of the plurality of belts is spaced equidistant along each cuboid member. In particular embodiments, each cuboid member has a belt strapped proximate to a joint with an adjacent cuboid member, and another belt spaced midway along the cuboid member. The belt can comprise or essentially consist of Kevlar^{®}; however, the belt can additionally or alternatively comprise or essentially consist of one or more additional or other types of explosive force absorbent / resilient / resistant materials (e.g., at least one explosive force absorbent / resilient / resistant polymer material, such as an ultra high molecular weight polyethylene (UHMWPE) fiber containing or fiber based material, where in certain embodiments the explosive force absorbent / resilient / resistant polymer material(s) may contain nanostructures or nanoparticles that can aid explosive force absorption / resilience / resistance).

For several embodiments, the system further comprises a thermal-resistant sheet wrapped around at least one of the cuboid members or the joint of two adjacent cuboid members. For some embodiments, the system further comprises a water-resistant and flame resistant material or fabric wrapped around at least one of the cuboid members or around joint of two adjacent cuboid members.

In accordance with an aspect of the present disclosure, the first plurality of cuboid members includes a first terminal cuboid member, and the cable trough system can further comprise one of: (a) a second cuboid member structure coupled to the first terminal cuboid member of the first plurality of cuboid members, wherein the second cuboid member structure has a larger opening end, a smaller opening end, and a length therebetween along which a perpendicular cross-sectional area changes between the larger opening end and the smaller opening end, and wherein one of the larger opening end and the smaller opening end is coupled to the front opening of the first terminal cuboid member of the first plurality of cuboid members; and (b) a third cuboid member structure comprising a plurality of cuboid member segments configured for curving or bending in one of a leftward, a rightward, an upward, and a downward direction, wherein a terminal cuboid member segment of the third cuboid member structure is coupled to the first terminal cuboid member of the first plurality of cuboid members.

In accordance with an aspect of the present disclosure, each of the first plurality of cuboid members can have a first cross-sectional area perpendicular to a length of each of the first plurality of cuboid members, the first plurality of cuboid members includes a first terminal cuboid member, and the cable trough system can further comprise: (a) a second cuboid member structure coupled to a first terminal cuboid member of the first plurality of cuboid members, wherein the second cuboid member structure has a larger opening end, a smaller opening end, and a length therebetween along which a perpendicular cross-sectional area changes between the larger opening end and the smaller opening end, and wherein one of the larger opening end and the smaller opening end is coupled to the front opening of the first terminal cuboid member of the first plurality of cuboid members; and (b) a third plurality of cuboid members, wherein each of the third plurality of cuboid members has a third cross-sectional area different than the first cross sectional area, and wherein a terminal cuboid member of the third plurality of cuboid members is coupled to the other of the larger opening and the smaller opening end of the second cuboid member structure.

### Brief Description of the Drawings

FIG. 1 is a cross sectional view of a cable tunnel in which cable troughs reside along / on trough racks;
FIG. 2 in an upper portion shows a representative, typical, or standard straight configuration Flame Retardant Fibre Reinforced Plastic (FR-FRP) trough, and in a lower portion shows an exploded version of the FR-FRP trough in accordance with an embodiment of the present disclosure;
FIG. 3 is a cross sectional view of a representative, typical, or standard trough with accessories in accordance with an embodiment of the present disclosure;
FIGs. 4A and 4B respectively show first (e.g., left) and second (e.g., right) side views of a representative, typical, or standard elongate trough having circumferential Aramid bands in accordance with an embodiment of the present disclosure;
FIG. 5 shows a splice plate in accordance with an embodiment of the present disclosure;
FIG. 6 shows a sacrificing shield plate in accordance with an embodiment of the present disclosure;
FIGs. 7A, 7B, and 7C are three-dimensional (3D) drawings showing aspects of a representative, typical, or standard joint bay trough in accordance with an embodiment of the present disclosure;
FIG. 8 is an exploded view of portions of the joint bay trough shown in FIGs. 7A through 7C, e.g., which can be disposed between two adjacent joint bay troughs;

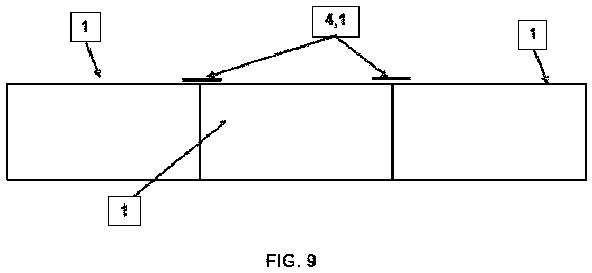

FIG. 9 shows a representative cable fault access point located at regular intervals, e.g., every 50m;
FIG. 10A shows a representative, typical, or standard trough assembly in accordance with an embodiment of the present disclosure;
FIG. 10B shows a guide plate installed on a bottom trough;
FIG. 10C shows a top splice plate and a bottom splice plate at a location between two consecutive troughs in accordance with an embodiment of the present disclosure;
FIG. 10D shows a sacrificing shield installed on a bottom trough;
FIG. 10E shows a cooling pipe support in accordance with an embodiment of the present disclosure;
FIG. 10F shows a trough wrapped with Aramid bands in accordance with an embodiment;
FIG. 10G shows a representative, typical, or standard 2.8m long trough wrapped with Aramid bands, buckles and packers in accordance with an embodiment of the present disclosure;
FIG. 10H shows a trough wrapped with an Aramid sheet at a joint bay location in accordance with an embodiment of the present disclosure;
FIG. 10I shows a trough wrapped with an Aramid sheet and Aramid bands at a joint bay location in accordance with an embodiment of the present disclosure;
FIG. 10J shows a trough wrapped with a layer (e.g., an outer / final layer) of a Water Resistant / Water Proof Flame Retardant (WR/WP-FR) wrap, with an Aramid sheet and Aramid bands below, at a joint bay location and secured with SS316 buckles;
FIG. 10K shows a cable head being lowered onto or into a bottom trough;
FIG. 10L shows a representative top cover of 50m length that can be opened on two ends;
FIG. 10M shows a space available for an H-Clip for a cooling pipe support and a top cover in accordance with an embodiment of the present disclosure;
FIG. 10N shows a cooling pipe support and top cover installed onto an H-clip;
FIG 10O shows a second embodiment or version of a cooling pipe support;
FIG. 10P-1 shows a third embodiment or version of a cooling pipe support, extruded as one piece;

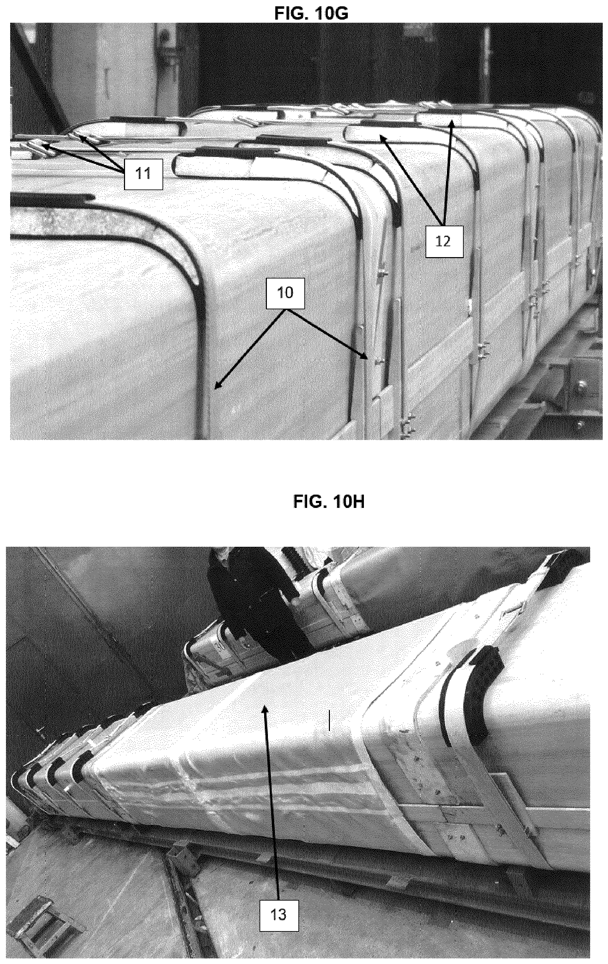

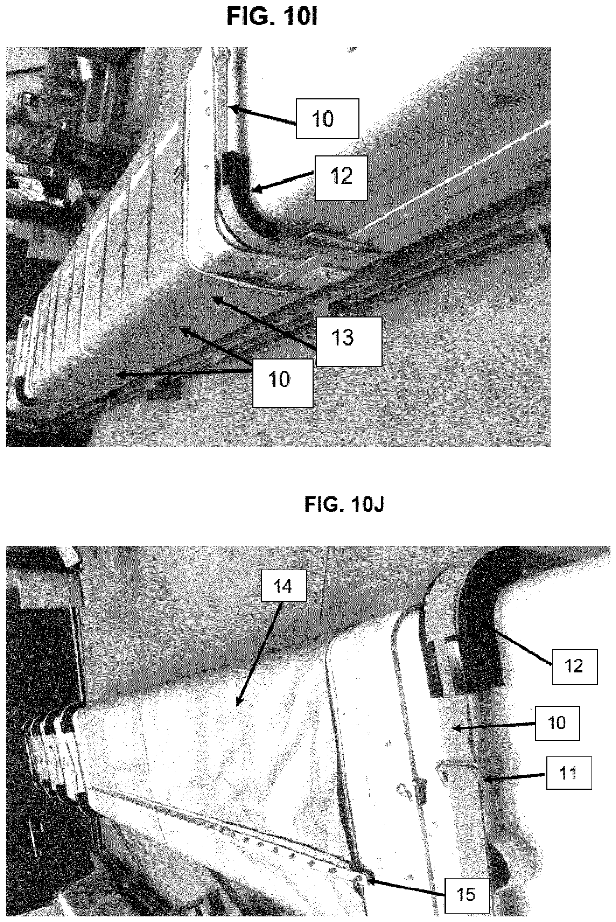

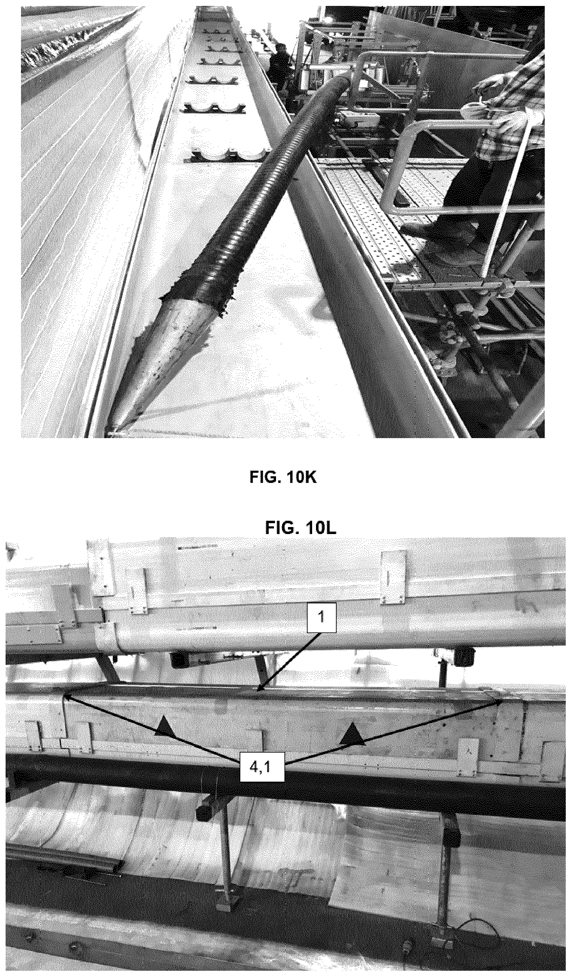

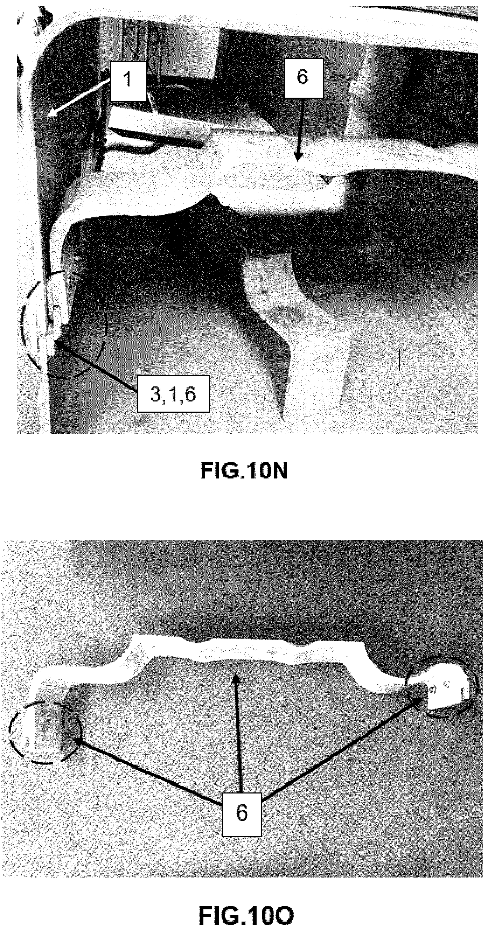

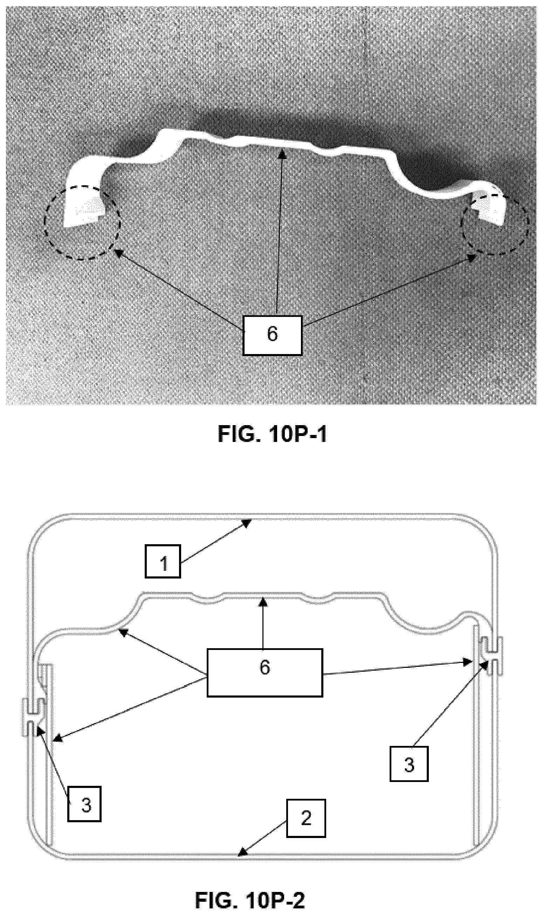

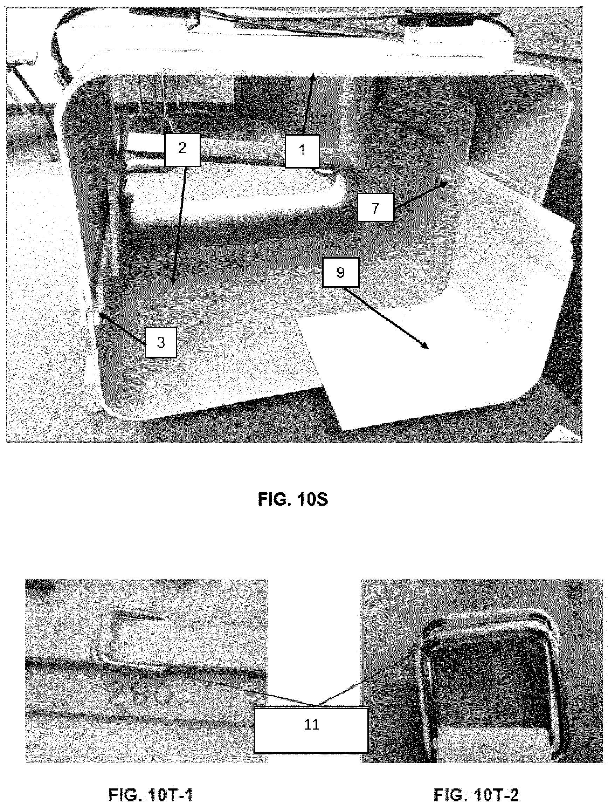

FIG. 10P-2 shows a fourth embodiment or version of a cooling pipe support;

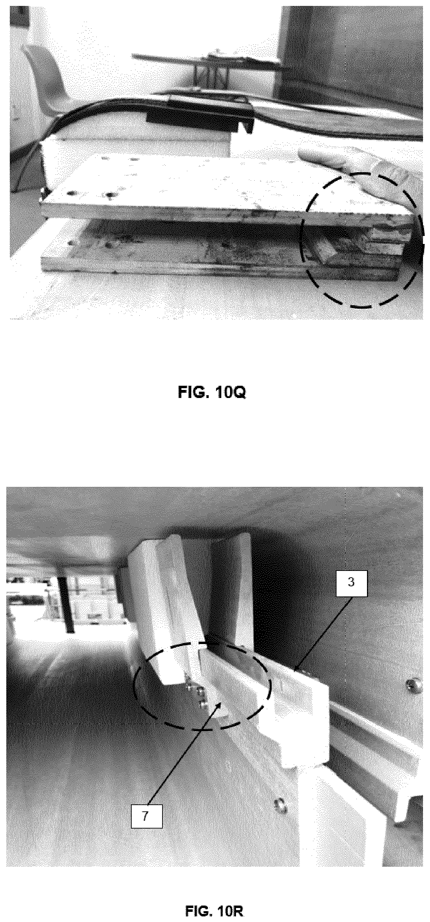

FIG. 10Q shows a first embodiment or version of a guide plate adhered together using multiple plates for bolting to a trough using galvanized bolts;
FIG. 10R shows a second embodiment or version of a guide plate extruded as a single piece without using glue(s) to adhere them together in accordance with an embodiment of the present disclosure;
FIG. 10S shows a section of an embodiment of a sacrificing shield;

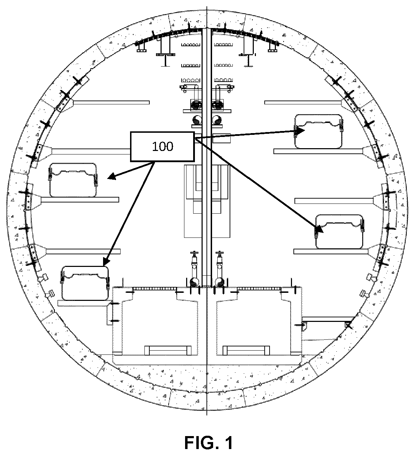

FIGs. 10T-1 and 10T-2 show a representative buckle assembly, including at least one buckle having a knurled, textured, or roughened face or edge portion;

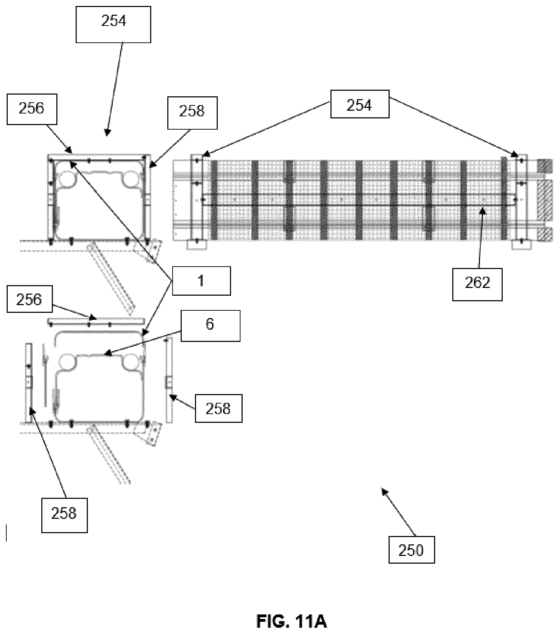

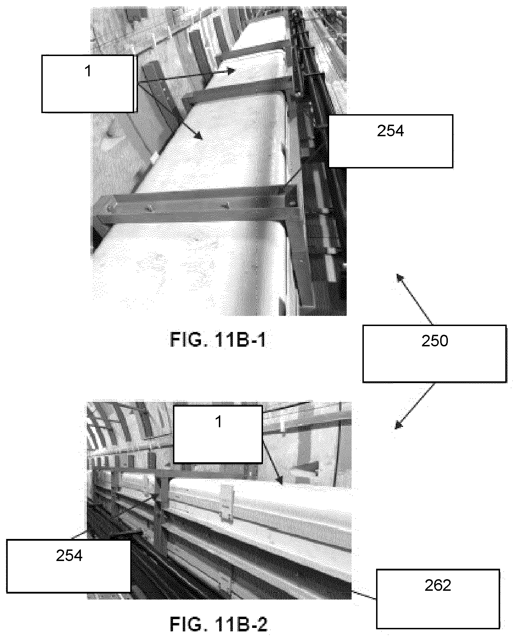

FIG. 11A is a cross-sectional view of a hybrid type of joint bay trough with an openable top panel in accordance with an embodiment of the present disclosure;
FIGs. 11B-1 and 11B-2 show a representative hybrid type of joint bay trough corresponding to or analogous to that shown in FIG. 11A;

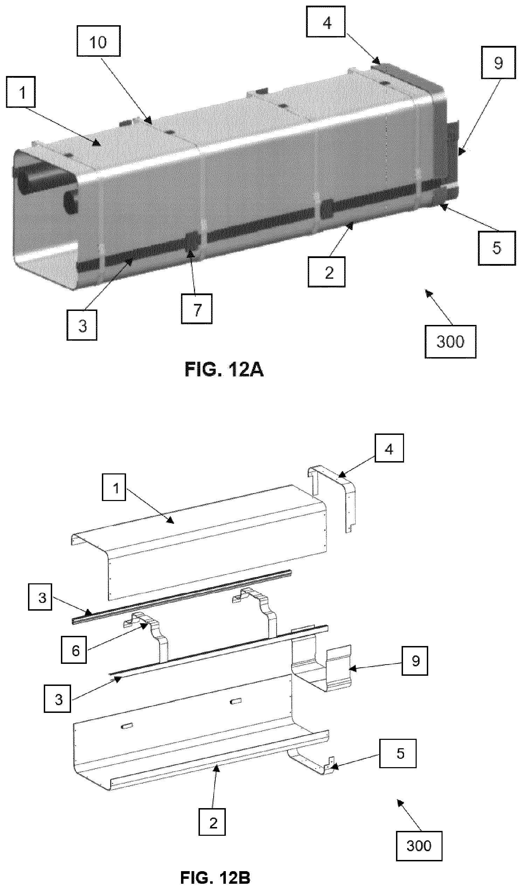

FIG. 12A is a perspective view of an embodiment of transposition trough;
FIG. 12B is an exploded view of the transposition trough shown in FIG. 12A;

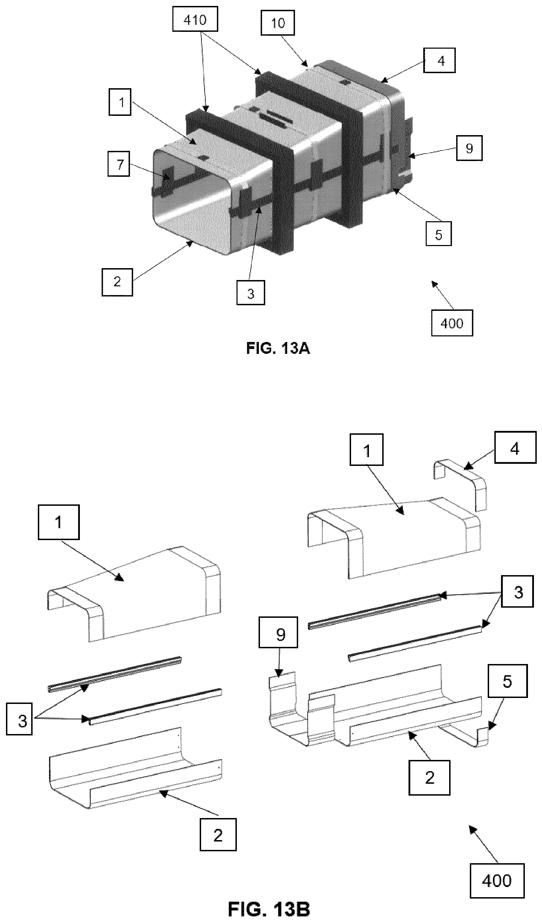

FIGs. 13A and 13B are a perspective view and an exploded view of an embodiment of a reducer trough;

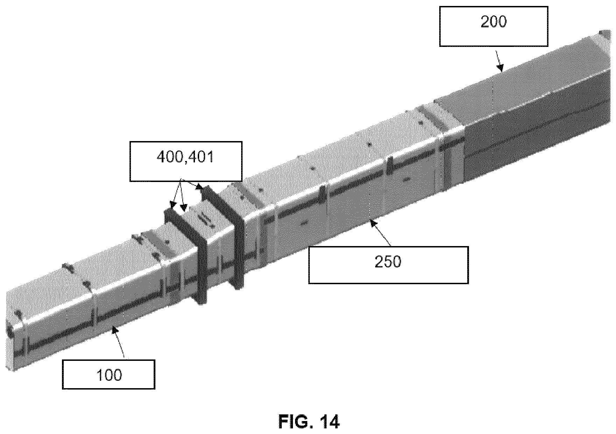

FIG. 14 is a perspective view of a coupled or connected reducer trough, a transposition trough, and a joint bay trough in accordance with an embodiment of the present disclosure;

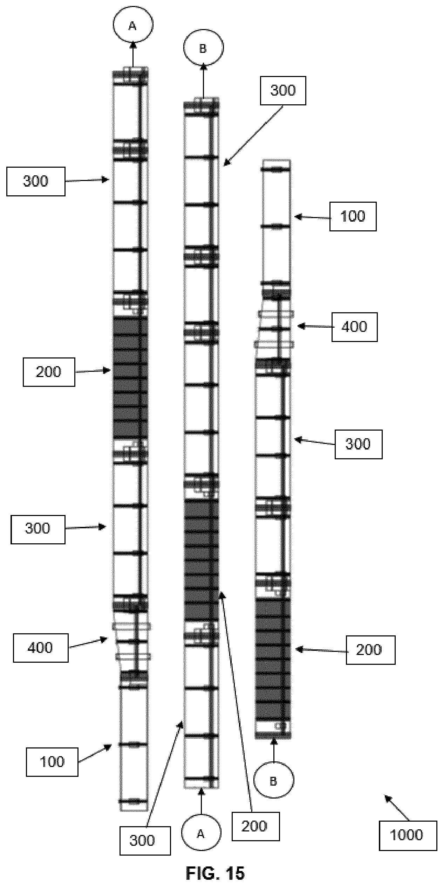

FIG. 15 is a schematic view showing general arrangement of a multi-trough system including the reducer trough, the transposition trough, and the joint bay trough in accordance with an embodiment of the present disclosure;

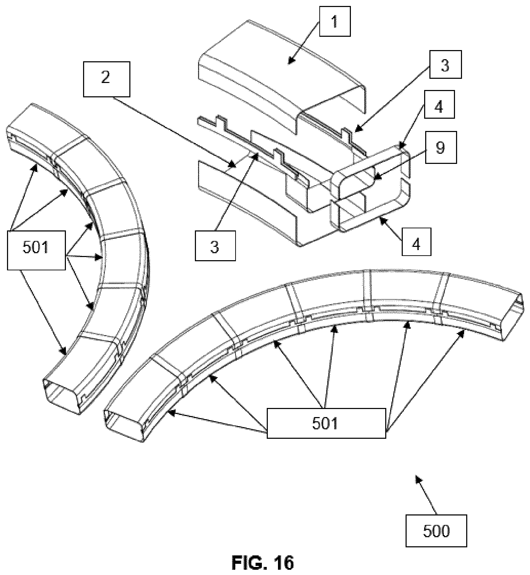

FIG. 16 shows a combined perspective and exploded view of a left / right turn trough in accordance with an embodiment of the present disclosure;

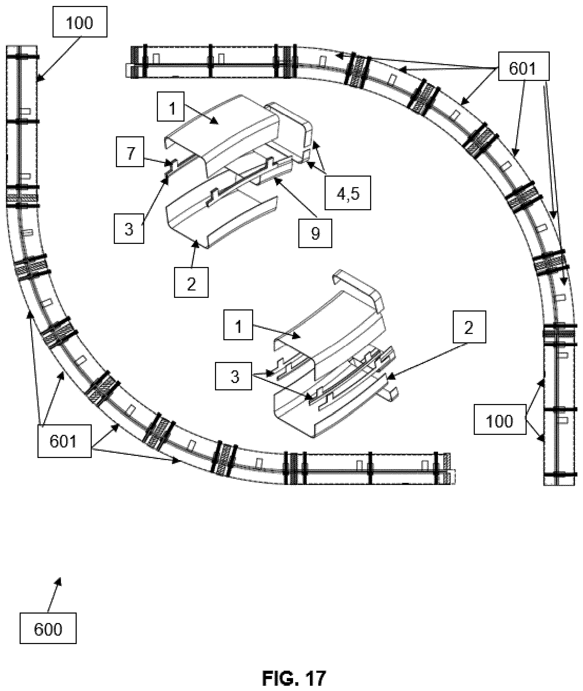

FIG. 17 shows a combined perspective and exploded view of an upward / downward trough in accordance with an embodiment of the present disclosure; and

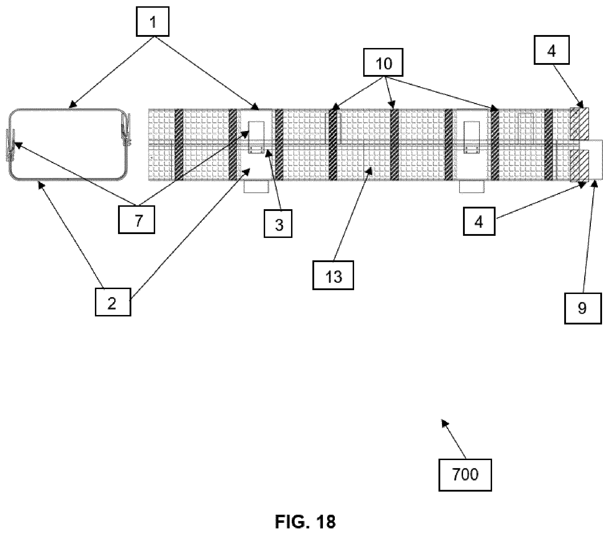

FIG. 18 shows a combined front and side cross-sectional view of a reduced height trough in accordance with an embodiment of the present disclosure.

### Detailed Description of Particular Aspects of Representative Cable Trough Assemblies

### Fundamental/Foundational/Representative/Typical/Standard FR-FRP Trough Assembly Structure(s)

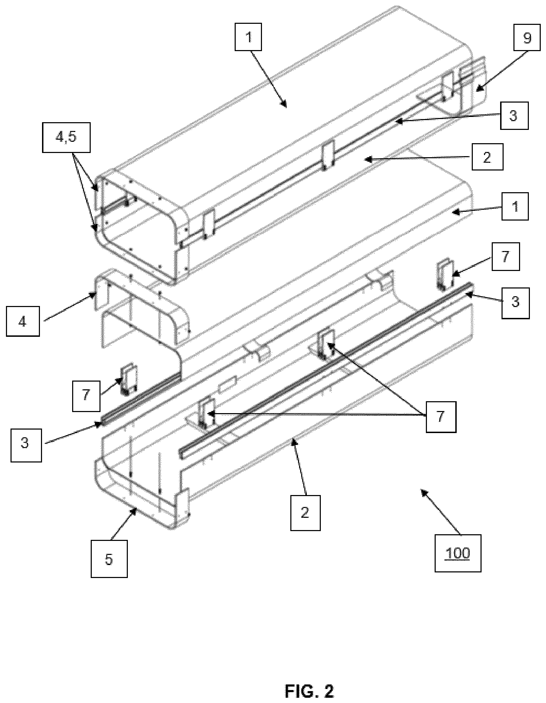

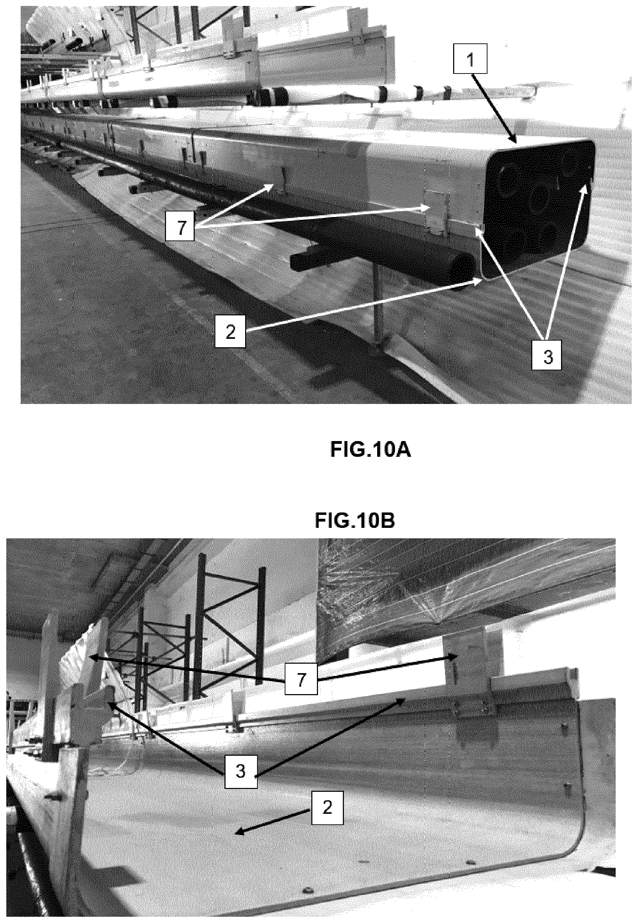

With reference to FIGs. 2 through 6 and also FIG. 10A, in several embodiments a basic, fundamental, foundational, representative, typical, standard, general, or straight-type Flame Retardant Fibre Reinforced Plastic (FR-FRP) trough assembly or trough 100, which can simply be referred to herein as a trough 100, can include the following primary components:

**Table 1: Primary Components of standard FR-FRP trough**

| **Part No.** | **Part Description** | **Quantity / Part Count** |
|---|---|---|
| 1 | First / Top Trough, Cover, or Casing | 1 |
| 2 | Second / Bottom Trough, Cover, or Casing | 1 |
| 3 | H-clip or Panel Edge Clip | 2 |
| 4 | First / Top Splice Plate or Top Bracket | 1 |
| 5 | Second / Bottom Splice Plate or Bottom Bracket | 1 |
| 6 | Cooling Pipe Support or Support | 2 |
| 7 | Guide Plate or Guiding Element | 6 |
| 8 | Cable Spacer | Not always in typical use |
| 9 | Sacrificing / Sacrificial Shield or Protective Shield | 2 |
| 10 | Aramid Band and Buckle or Belt and Buckle | 3 |
| 11 | Packers or Cushioning Components | 6 |

Thus, an FR-FRP trough 100 in some embodiments includes at least or up to 11 components or parts assembled together to form an entire assembly, which is flame and explosion retardant and durable. It is important to note that these primary components can be used to form particular portions of additional or other types of trough assemblies (such as a transposition trough, a reducer trough, a joint bay trough, etc... as also described herein) with certain parts being removed, added, and/or modified, such that specific structural trough aspects can depend upon embodiment details and/or situational needs. In some embodiments, a standard FR-FRP trough 100 having a straight configuration can be 2800mm long x 766mm wide x 566mm high, although dimensions can depend upon embodiment details and/or situational needs in a manner readily understood by individuals of ordinary skill in the relevant art.

### Top Trough / Top Cover / Top Casing

The top trough / top cover / top casing is positioned over the bottom trough / bottom cover / bottom casing for covering or overlaying the bottom trough / bottom cover / bottom casing after a set of cables has been placed or positioned along or inside the bottom trough / bottom cover / bottom casing. The top cover protects the cables beneath / inside from damage, e.g., arising from objects or substances falling toward the cable. The top cover also serves a fire safety purpose, in that if a power arc or explosion event due to cable fault occurs, the top cover can shift or move upwards, e.g., during or in response to the power arc event, and subsequently return to or essentially to its original position to prevent the spread of fire and/or cut off oxygen supply to the fire. Additional structural elements facilitate the return of the top cover to its original or intended position, as further detailed below.

### Bottom Trough / Bottom Cover / Bottom Casing

The bottom trough / bottom cover / bottom casing can be secured to steel brackets within a cable tunnel before accessories and cables are placed inside the trough structure. The purpose of the bottom trough / bottom cover / bottom casing is to be a holding structure for the cables, as well as to protect the cables from external damage from objects or substances outside of the bottom trough / bottom cover / bottom casing. In the event of a fire or explosion event, it also serves to contain the fire or explosion inside the trough without spreading the hazard to other locations.

### H-Clip or Panel Edge Clip

The H-clip is a part whereby the top cover and the cooling pipe spacer can be coupled together, such that the top cover and the cooling pipe spacer have a cooperative support structure and share available space. The H-clip is disposed at a coupling location or intersection point linking or connecting the bottom cover to the top cover.

### Top Splice Plate or Top Bracket

A top splice plate can be placed at the interface top boundary of two adjacent top covers. The top splice plate is a coupling or connection plate between two adjacent troughs 100, thus making the troughs 100 along a trough system span act or essentially act as a monolithic structure. The top splice plate also covers an(y) excess gap between two adjacent troughs 100 to ensure that no or essentially no gap exists or is created in between two adjacent troughs 100, preventing foreign objects or liquids from entering the trough(s) 100 and causing damage to the power cables and water pipes therein. The top splice plate also limits or prevents air / oxygen from entering the trough encasement during a power arc event.

### Bottom Splice Plate or Bottom Bracket

A bottom splice plate serves a counterpart function to the top splice plate, and is placed at the location between two bottom cover edges, and provides a connection plate and also covers any excess gap(s) between two adjacent troughs 100 to ensure that no gap intentionally exists or is created between two adjacent troughs 100, such that any foreign objects or liquids would not enter the trough(s) 100 and cause damage to the power cables and cooling pipes therein. The bottom splice plate also limits or prevents air / oxygen from entering the trough encasement during a power arc event.

### Cooling Pipe Support or Support

After the power cables are laid into the trough 100 (e.g., positioned along the bottom cover), there can be a set of pipes, e.g., fluid / water cooling pipes, placed above or laid on top of the power cables, which can cool the power cables during power transmission, as there is tremendous heat generated along the cable. If the cable if not cooled, cable de-rating due to high heat may result. A cooling pipe support provides some segregation or separation between the power cables and cooling pipes. A portion of the cooling pipe support can sit on and be supported by the H-clip, which holds a cooling pipe leg in place with little sideways movement.

### Guide Plate or Guiding Element

Guide plates can be placed at particular intervals along a trough 100. A guide plate guides the top cover into the H-clip without the top cover getting misaligned as a result of explosion force impact. During an explosion event, within 0.4 seconds the entire top cover shifts upwards due to explosion force(s). The guide plate keeps the top cover movement in check so that when the top cover moves up and subsequently drops down within two "teeth" of the guide plate, the top cover is still able to close consistently, securely, or nicely onto the H-clip. The guide plate has a profile that allows the top cover to return back to or essentially to its original position, and the guide plate guides the top cover onto the H-clip in an intended position after a power arc explosion event.

### Cable Spacer

The cable spacer can establish a gap between the cable underside or bottom and the bottom cover. This is to create a small gap for air circulation to cool the ambient air when the power cable is hot during power transmission, such that the power cable avoids or does not have back-to-back or direct contact with the bottom cover. Cable spacers are not always required in all embodiments.

### Sacrificing Shield or Protective Shield

The sacrificing or sacrificial shield can be a two piece or two section component that is placed on the inside of the bottom cover to act as a first line of defense in cushioning the impact force created by an explosion. It is placed at a location corresponding to or overlapping the bottom splice plate, as such locations are typically the most significantly or severely impacted when there is a power arc explosion event. Thus, the sacrificing shield is placed at a known weak(er) or weakest point of the trough to aid structural integrity in the event of a cable fault explosion event.

### Aramid Band with Buckle, or Belt with Buckle

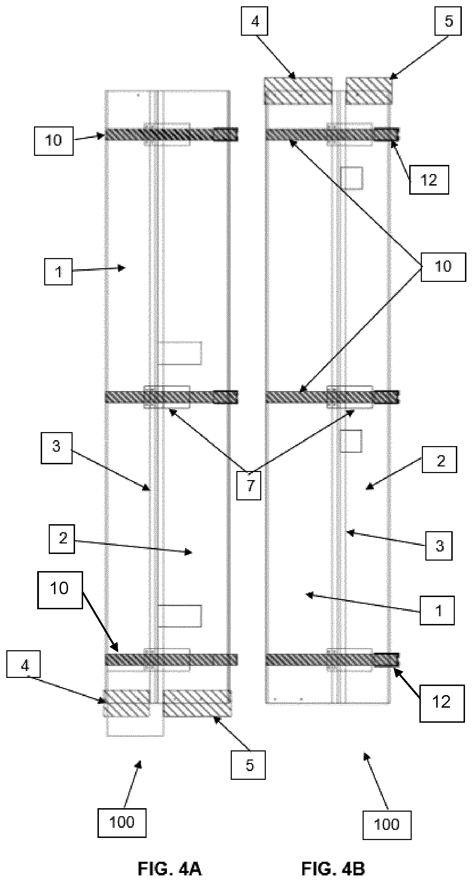

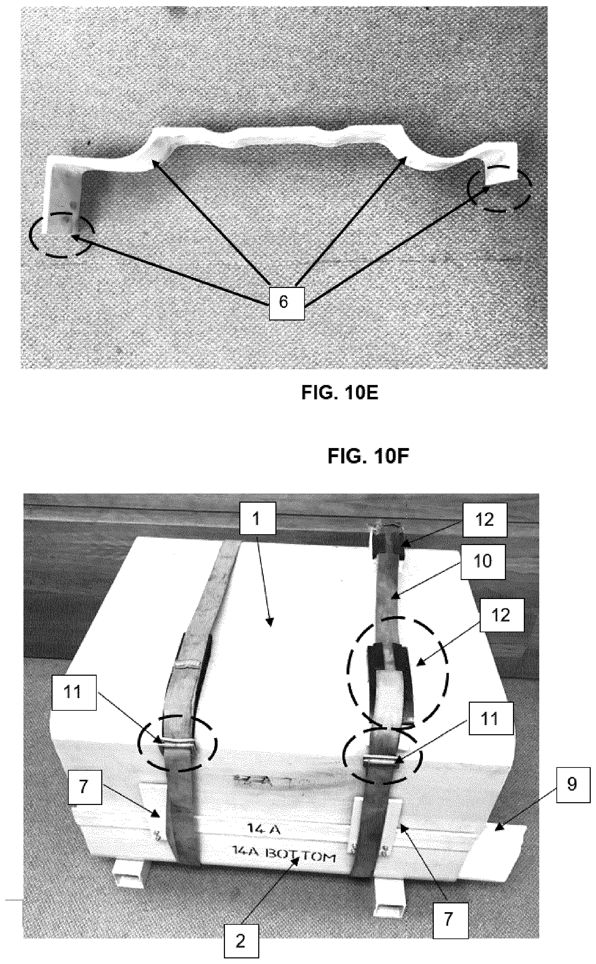

Troughs 100 and/or portions of a trough system assembled can be circumferentially secured or wrapped by bands that include or are made of explosive force absorbent / resilient / resistant materials, such as Aramid bands, or bands that include or are made of another type of explosive force absorbent / resilient / resistant materials (e.g., at least one explosive force absorbent / resilient / resistant polymer material, such as an ultra high molecular weight polyethylene (UHMWPE) fiber containing or fiber based material, where in certain embodiments the explosive force absorbent / resilient / resistant polymer material(s) may contain nanostructures or nanoparticles that can aid explosive force absorption / resilience / resistance). This can be seen at least in FIGs. 4A, 4B, and FIG. 10F, showing a representative manner of how a set of Aramid band(s) and a set of buckles can be used to wrap a representative, typical, or standard 2.8m trough 100 at 1.2m centre-to-centre spacing. FIGs. 10T-1 and 10T-2 show representative buckle assemblies, which include at least one buckle having a knurled or textured face, as further elaborated upon below. An Aramid band can include or be woven from Kevlar^{®} and the buckles can include or are made from a metal such as stainless steel. For some embodiments, stainless steel SS316L buckles offer a further improvement. Once the top cover of a trough is installed, the Aramid bands can be used to wrap around the entire trough 100, e.g., at 1.2m spacing. Such bands hold top cover relative to an intended guide plate alignment during an explosion event and then absorb at least some of the impact force of the explosion. A band spacer, packer, or cushioning element acts as a cushion to mitigate or absorb impact force during explosion.

### Aramid Wrap Sheet or Thermal Resistant Sheet

Typically or preferably, a high strength and heat resistant and/or explosive resistant sheet of material, e.g., a polymer material, such as an Aramid wrap sheet, is wrapped around one or more portions of the trough 100 or series of troughs 100. A representative wrap sheet can include or be made from Aramid string of 3000 denier. The wrap sheet(s) can be wrapped around troughs 100 or portions of a trough system at least at cable joint locations to alleviate explosion impact force severity. It can be noted that particular trough structures at the cable joints can have a different configuration from a typical straight trough 100, yet wrap sheets can still be employed in such configurations if or as needed or desired.

### Top Trough / Cover / Casing, and Bottom Trough / Cover / Casing - Improvements

Some top cover embodiments carry a chamfered round(ed) or round edge. The Inventor designed the round edge radius and profile to mitigate potential safety hazards as well as keep sufficient space for installations inside the trough 100. Some embodiments of the bottom cover carry a chamfered round(ed) or round edge. The Inventor designed the round edge radius and profile so as to alleviate safety hazards as well as keep sufficient space for installations inside the trough 100.

### H-Clip or Panel Edge Clip - Improvement

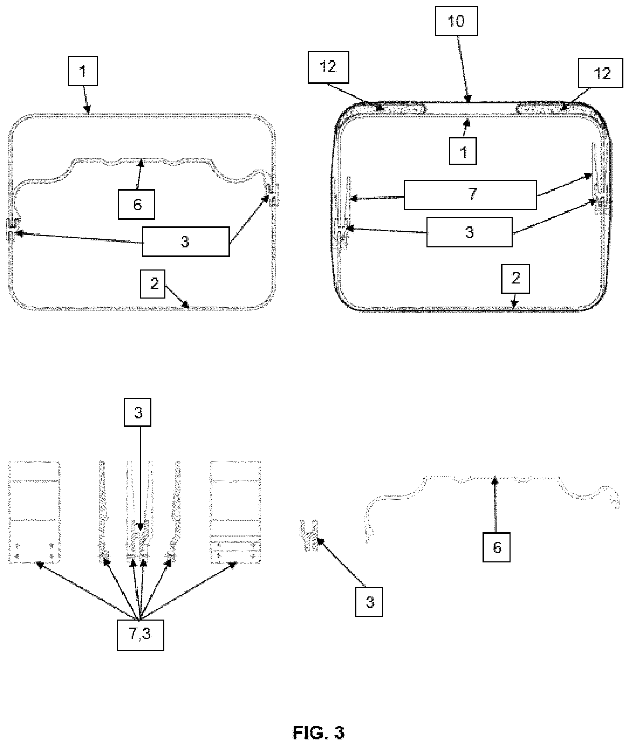

The Inventor invented the H-clip profile and dimensions to allow sufficient space for the top cover and the cooling pipe spacer to be able to sit on top portions of the H-clip for support. See FIG. 3 and FIG. 10B. The position of the H-clip can be or generally needs to be at a correct height in relation to the height of the cuboid member so as not to obstruct installation of cables.

### Top Splice Plate or Top Bracket - Improvement

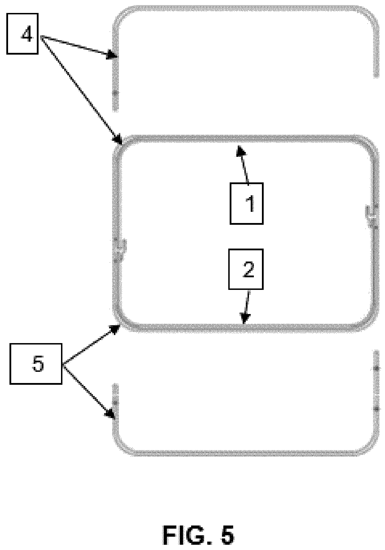

The inventor conceived the employment of the top bracket and incorporated it into the standard trough 100 because it was found that the gap in between two consecutive top troughs 100 could tend to be the location of a potential hazard; see FIG. 5. The top splice plate can also serve as a connection piece between two adjacent top covers.

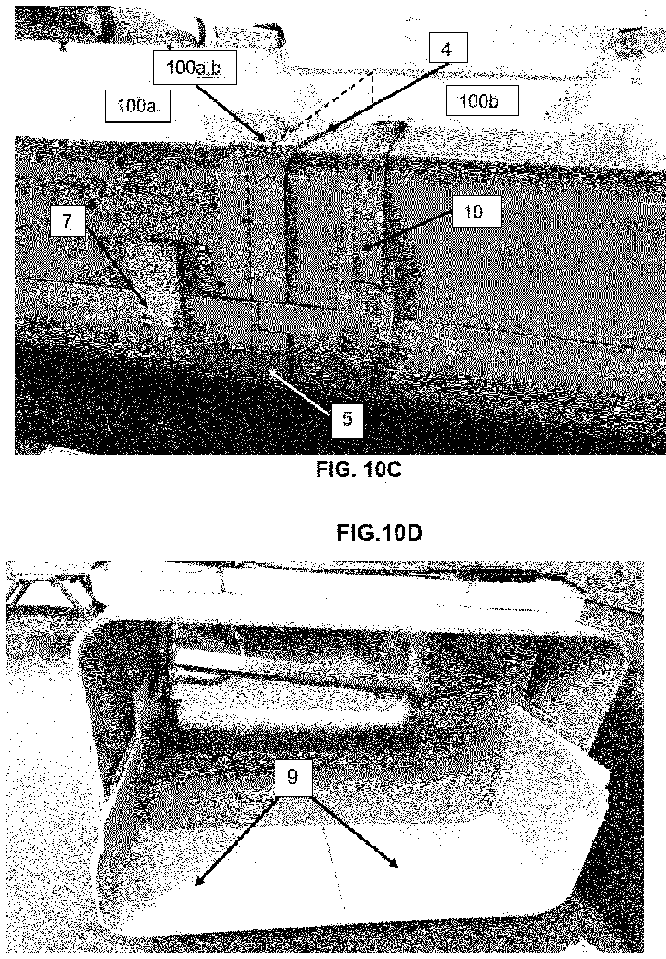

In some Japanese designed trough assemblies, establishing the connection between two trough assemblies is very tedious and if one needs to open the top cover, the cable installer must undesirably open the top cover for an entire span, e.g., along multiple serially adjacent trough assembly sections. Embodiments in accordance with the present disclosure eliminate this disadvantage by way of the top bracket / splice plate, which is appropriately sized for covering gaps, such that no foreign objects can drop inside the trough 100. See FIG. 5 and FIG. 10C.

The inventor further improved the trough 100 such that a given distance, e.g., every 50 metres, along a trough assembly or trough system there is a double splice plate, e.g., on one 2.8m trough, which makes available an access point within this 50m length. Otherwise, if any cable fault occurs, the maintenance team would undesirably need to open up the top cover from the very beginning of a starting point spanning a longer or much longer distance.

### Bottom Splice Plate or Bottom Bracket - Improvement

The inventor conceived the employment of the bottom bracket in the trough 100 and added it into various embodiments because it was found that the gap between two consecutive bottom covers could tend to be the location of a potential hazard. The bottom bracket / splice plate is appropriately sized to cover up the gaps and prevent foreign objects from entering inside the trough 100. See FIG. 5 and FIG. 10C. The bottom splice plate is also used as a connection piece between two bottom covers.

### Cooling Pipe Support or Support - Further Improvement

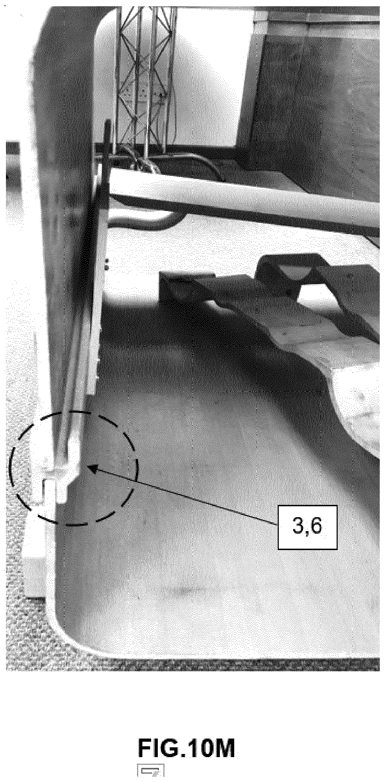

The actual profile and curvature of the cooling pipe support(s) of the troughs 100 were developed by the inventors. A 1^{st} cooling pipe support version or embodiment has straight legs, but it was found that when the cooling pipes are installed, the weight of water pipes could tend to warp the legs and hence cause the space on the H-clip to be constrained when co-shared with the top cover. Hence, improvement was made in a 2^{nd} version to revise the cooling pipe support leg to be a two-ply leg that would restrict the leg from moving out. See FIG. 10E for the 1st version and see FIG. 10O for a 2^{nd} version. FIG. 10M shows available H-Clip space for both the top cover and the cooling pipe support. FIG. 10P-1 shows a 3^{rd} version of the cooling pipe support with further improvements at the legs and the top cover installed onto the H-clip. Such improvements help ensure that the cooling pipe support legs would not intrude or overly intrude into the available space on the H-clip once the top cover shifts or moves up during a power arc event that generates an impact force which displaces the top cover.

The centre-to-centre spacing interval of the cooling pipe support was also invented so that it would be able to adequately support the cooling pipes. The cooling pipe legs underwent substantial improvements as well. A 1^{st} version of the cooling pipe support is a single legged support to H-Clip; a 2^{nd} version (FIG. 10O) is a 2-legged support to H-Clip; and a 3^{rd} version (FIG. 10P-1) of the cooling pipe support is the entire extrusion of the cooling pipe support in one piece. Referring to FIG. 10P-2, a 4^{th} version of the cooling pipe support is shown, whereby the leg or inner leg, housed in the cuboid member or the bottom casing, of the two-legged support is further spatially extended downward compared to the outer leg or leg hooked or rested onto the H-clip to prevent misalignment of the cooling pipe support after and/or during the power arc event. The extension of the inner leg can be an additional construct mounted at the side of the 3^{rd} version shown in FIG. 10P-1 or an integral part of the extruded cooling pipe support, depending upon embodiment details.

### Guide Plate or Guiding Element - Further Improvement

The inventor conceived of a 1^{st} version of the guide plate by joining various cut profiles together through adhesive. See FIG 10Q. During type test and mock-up, it was found that the 1^{st} version could be inadequate for guiding the top cover into place, thus in a 2^{nd} version an improvement was made to the profile and the guide plate was moulded in a single piece. See FIG. 3 and FIG. 10R for the 2^{nd} version. Stainless steel bolts and nuts, e.g., SS316, were also used as improvements from previous galvanized bolts and nuts.

### Sacrificing Shield or Protective Shield - Further Improvement

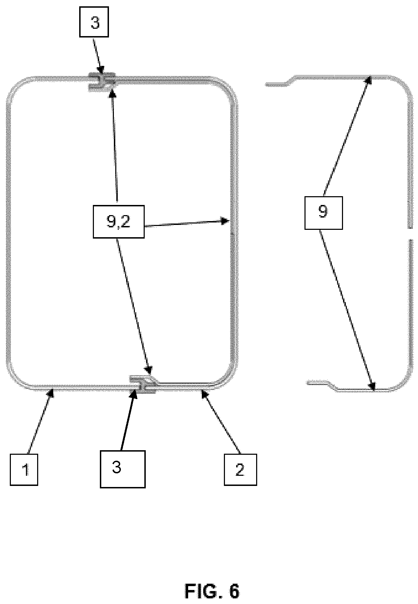

The Inventor found that it is useful, desirable, or necessary to have a part referred to herein as a sacrificing shield in between two guide plates at two consecutive trough coupling or connection points to cushion an impact force at the weak(est) point of the connection. See FIG. 6 and FIG. 10D. The Inventor conceived of the profile and height of the sacrificing shield to meet type test requirements. The sacrificing shield was designed as two parts in some embodiments for ease of installation; in certain embodiments, it can be a single piece / unitary part. See FIG. 10S for one section and FIG. 10D for two sections of the sacrificing shield.

### Aramid Band with Buckles or Belt with Buckle - Further Improvement

The Inventor found that it can be useful, better, or necessary to have high-strength, and heat and/or explosive force resilient or resistant bands, e.g., Aramid bands, spaced not at equal spacing along the trough 100 but at a spacing as shown in FIGs. 4A and 4B. In such a configuration, Aramid bands are spaced closer together at the edges or borders of troughs 100 and at least one additional Aramid band is positioned at or approximately at trough centre, that is. This spacing configuration was reduced to practice through a series of research & development and type test results.

In an improvement to the buckle on the band, an additional, e.g., smaller, buckle was added to prevent slippage with knurling or textured / rough(ened) edges on at least one face of the additional buckle. Hence, it becomes a buckle assembly or two buckle system (one large(r) buckle and one small(er) buckle) with knurling on portions of at least one face or edge of the two buckles attached to the Aramid band. See FIG. 10F for the Aramid band secured to the Trough 100 using two buckles; and see FIGs. 10T-1 and 10T-2 showing aspects of a representative two buckle assembly.

The stitching of the Aramid band was also improved, as the way the Aramid band is stitched at the buckle / buckle assembly end region contributes to the required strength and elongation stiffness, e.g., in various embodiments the Aramid band is allowed to elongate when the impact force is within an intended, specified, or predetermined force limit (e.g., a certain number of tons, such as several or many tons) and the buckles' tightness is allowed or designed to slip when the impact force goes above the predetermined limit, such as a certain number of tons), yet retain grip or re-grip when the impact force drops below the predetermined limit. Some Japanese-designed trough band buckles are round in shape and do not have any knurling on their buckle, which results in undesirable performance and/or trough structure misalignments during and/or after power arc explosion events.

Buckle improvements were made in terms of size and knurling at the buckle face(s), and the inventor added one more buckle to make a buckle assembly / two buckle system (i.e. one big and one small(er) buckle working together). A knurling pattern or engraved pattern for the buckle assembly was invented to allow for the Aramid band to slip during an initial power arc explosion event and at the same time hold on to the band to prevent further slippage after the initial power arc explosion event. Improvements were made to Aramid band in terms of stitching at the joint, such that an appropriate band weaving method was utilized after a series of research and development trials.

There is typically an additional part or set of parts associated or included with or added to the Aramid band, e.g., disposable under a particular segment of an Aramid band, which is a set of band packers or cushioning elements shown in FIG. 10F. The band packers allow the top cover to move up slightly during an explosion due to a cable fault in the trough 100. It was determined that when an explosion event happens, the impact force arrives at the top cover in less than 0.1 second, and the Aramid band does not have sufficient time to elongate in this short time interval. The band packers provide a first line of energy absorption for the initial impact force. The band packers main, key, or essential properties are impact force absorption to absorb the initial impact force rapidly pushing the top cover upwards, e.g., in approximately 0.1 second or less, during power arc explosion events. In various embodiments, each band packer includes or is made from one or more types of resiliently compressive polymer material(s) (e.g., a compressible polymer foam material).

### Further Aspects of Various Embodiments

A FR-FRP trough 100, which for purpose of simplicity and brevity can simply be referred to as a trough 100, is characterized by various parts assembled together to house power cables. The trough 100 is typically installed progressively starting from a bottom trough portion, e.g., the bottom trough, bottom cover, or bottom casing, using a bottom up assembly technique. A complete trough or trough system assembly can include or end with an Aramid band wrapping the top cover and bottom cover, e.g., as part of or at a last stage. The assembly of each trough 100 or a trough system having multiple troughs 100 therein or therealong is progressive, as each power cable that resides in the trough 100 needs to be installed into a given bottom cover at a particular elevation along the cable tunnel walls. See FIGs. 2 to 6 and FIG. 10A for aspects of representative or typical 2.8m straight trough parts and assembly thereof, and FIG. 10K with reference a manner in which the cables can be installed into a standard FR-FRP trough 100.

Various structural variations or permutations of a trough 100 and/or portions of a trough system in accordance with embodiments of the present disclosure exist to meet various types of tunnel alignments, site constraints, and work purposes. These include, for representative embodiments: a) 2.8m long, 2m long, 1.6m long, and 1.4m long troughs; b) bend troughs at one or more selected or predetermined radii, e.g., a 5m radius, for vertical and/or bends; c) at cable joint locations, the assembly of the troughs follows a certain assembly configuration to allow working space for a cable jointer and allow workers to install the cables into the troughs; d) there is a 3-piece trough which allows ease of dismantling for fault repair whereby the trough is situated at an inner row of a certain height; and e) there is also an FR-FRP trunking to house auxiliary cables. For locations at cable joints, the usage of Aramid wraps and Aramid bands can be configured in accordance with a specific format to give maximum protection to the tunnel assets in the event of a cable fault event causing explosion and/or fire. A series of type tests were carried out by accredited laboratories around the world to confirm that embodiments of troughs of an assembled trough system clearly satisfy appropriate Technical Specifications requirements.

Embodiments in accordance with the present disclosure and particular improvements to various trough related structures have made the installation of high voltage power transmission cables in the cable tunnel a safe and simple manner. In accordance with various embodiments, a trough 100 or trough system and its parts are substantially maintenance free and can include flame retardant materials, and can further include heat resistant and/or explosive force resilient or resistant materials. Such troughs when installed help mitigate the hazards of a cable fault event in the tunnel, which is typically several kilometres long and at approximately 60m depth underground. Another aspect of the invention is a trough system that can be assembled with ease in the tunnel where the availability of large equipment or machines to help installation is not feasible. The assembly can be entirely completed by way of bolt and nuts with no usage of welding, or nailing of the parts together in the tunnel, which also minimizes the risk of fire hazard.

As described in detail hereafter, there can exist additional and/or other types of trough types, trough structures, trough assemblies, and/or trough systems in accordance with embodiments of the present disclosure, which can be based on or analogous or similar to at least portions of the representative FR-FRP trough 100 described above.

### Joint Bay Trough Assembly

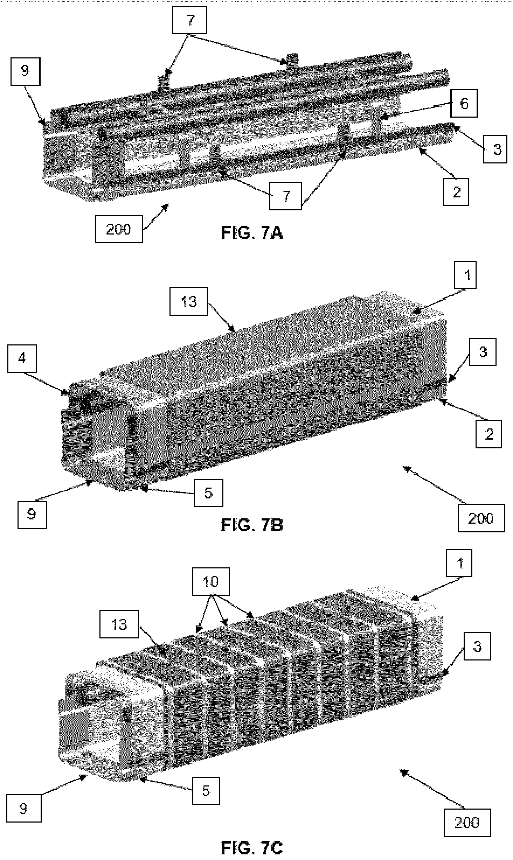

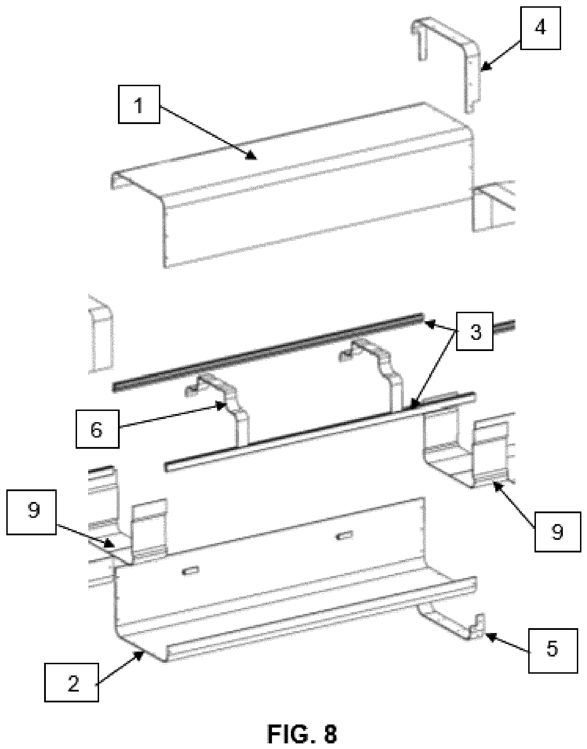

A joint bay trough assembly 200 is intended or dedicated for housing the joining of cables in various phases running along the trough system, and typically needs a larger inner cavity compared to a standard trough assembly 100 to accommodate the joined cables. Representative aspects of joint bay troughs 200 in accordance with particular embodiments of the present disclosure are shown in at least FIGs. 7A, 7B, 7C, 8, 10H, 10I, and 10J. Generally, the joint bay trough 200 comprises most of the parts or components of the standard trough 100. For a number of joint bay trough embodiments, the top and bottom covers are not designed to be completely detachable for creating a gap to vent the abrupt increased pressure during the power arc. Instead, air pressure is channeled towards both opening ends of the cuboid member of the joint bay trough 200 to a standard trough 100 via one or more reducer trough assemblies 400 coupling the joint bay trough 200 and the standard trough 100, and movement of top and bottom portions is controlled or controlled only by the wrap(s) and belt(s) / band(s).

A representative procedure for assembling or setting up the joint bay trough 200 is a bottom up approach, with the bottom cover / casing installed first, to the top cover / casing, followed by Aramid wrap and Aramid bands and buckles coupling or tying the bottom cover / casing and the top cover / casing together to form an integral trough, trough assembly, or trough system. The entire system can be wrapped in an outer sheet, such as a WR/WP-FR sheet, which can be secured to the underlying joint bay trough 200 by way of a retaining structure, for instance, at least one bar or rod structure having a plurality of openings therealong and associated nut-and-bolt pairs that couple the WR/WP-FR sheet to the bar or rod structure by way of cooperative alignment of apertures or holes formed along a strip of the WR/WP-FR sheet and the plurality of openings along the bar or rod structure. The bar or rod structure can be formed of a metal such as type 316SS. Typically or preferably depending upon embodiment details, there are 3 joint bay troughs 200 per circuit for the entire cable joint location; one joint bay trough 200 for one phase of power cable joint. A typical cable joint bay end-to-end is about 36.66m long, and a corresponding trough structure arrangement includes a set of joint bay troughs 200, a set of transposition troughs 300, and a set of reducer troughs 400.

### Hybrid Joint Bay Trough Assembly

Further embodiments relating to the joint bay trough 200 extend to or include a hybrid joint bay trough 250 such as shown in FIG. 11A, 11B-1, and 11B-2, which can comprise an inner trough or trough structure 252 that resides beneath at least one releasable or (re)openable outer frame structure 254, e.g., which has a top frame bar 256 disposed above the inner trough structure's top trough / top cover as indicated in FIG. 11A. The outer frame structure 254 can comprise a top frame bar 256 as well as a pair of side frame bars 258, e.g., vertically extending side frame bars 258, to which the top frame bar 256 is engageable, e.g., detachably or removably coupleable / coupled or securable / secured. In multiple embodiments, the top frame bar 256 can include a pair of downwardly extending edges couplable to or engageable with upper borders or edges of the side frame bars 258 and the upper edge of a first sidewall of the bottom trough / bottom cover via a pair of H-clips. A lower edge of the side frame bar 258 can terminate at the edge of a second sidewall of the inner trough structure's bottom cover using another H-clip. In some embodiments, the hybrid joint bay trough 250 has an external size of 766mm (Wide) x 566mm (High) and internal size of 750mm (Wide) x 550mm (High). The hybrid joint bay trough 250 with outer frame structure(s) 254 (e.g., at least one top frame bar 256 and associated side frame bars 258) is normally deployed as an inside, inward, or inner trough (nearer to a tunnel wall) for a particular trough rack elevation in a cable tunnel. The hybrid joint bay trough 250 is structured such that after its installation on a trough rack, it is possible to dismantle and reassemble the hybrid joint bay trough 250 for repair and maintenance. The removable top frame bar 256 provides ease of dismantling for accessing the inside or inner cavity of portions of the trough system, which can be difficult to reach for maintenance and/or repair.

In several embodiments, multiple outer frame structures 254 (e.g., a pair of outer frame structures 254), e.g., disposed at intermediate intervals along the hybrid joint bay trough 250 with a predetermined amount of space therebetween, can form a steel frame support structure 260, which can also include at least one elongate bar or connecting bar 262 coupling or connecting its outer frame structures 254, to help secure the inner trough 252 in position and preserve trough system integrity. Typically, top frame bars 256 are only (re)openable for maintenance and/or service, but not under the rising air pressure caused by the power arc. A hybrid joint bay trough 250 can be a substitute for a standard trough 100 if desired or needed.

### Transposition Trough Assembly

Referring to FIGs. 12A, 12B, and 14, representative embodiments of a transposition trough 300 are shown. A transposition trough 300 can be interposed between the joint bay trough 200 (or hybrid joint bay trough 250) and other types of trough assemblies, as illustrated in FIG. 15. The cable structure / diameter running within the trough system begins to transpose inside the transposition trough 300 before reaching the joint bay trough assembly 200 or after leaving the joint bay trough assembly 200. The transposition trough 300 can have an external size of 766mm (Wide) x 716mm (High) and internal size of 750mm (Wide) x 700mm (High). In some embodiments, a transposition trough length can be 3200mm, 3000mm, 2600mm or 1600mm to suit particular site constraints or requirements. A transposition trough 300 is constructed using a bottom up approach, with the bottom cover or casing installed first and then the top cover or casing, followed by a set of aramid bands including the buckles for tying the bottom cover / casing and the top cover / casing together to form an integral system or assembly.

### Reducer Trough Assembly

Referring to FIGs. 13A and 13B, another representative type of trough assembly, the reducer trough 400, is depicted. The reducer trough 400 is utilized to connect the transposition trough 300 or the joint bay trough 200 to the standard trough 100. The standard trough 100 has a cuboid member size smaller than the cuboid member of the transposition trough 300 or joint bay trough 200, and the reducer trough 400 functions to seamlessly couple or connect the cuboid members of two differently sized troughs or trough assemblies (i.e., troughs or trough assemblies having different cross-sectional areas). More particularly, the cuboid member of the reducer trough 400 is tapered from one end to another such that the cuboid member possesses a large(r) opening (and hence a large(r) cross-sectional area) at one end, a small(er) opening (and hence a small(er) cross sectional area) at an opposite end, and a length therebetween. The large opening is fashioned to couple or join to one opening ends of a transposition trough 300 / joint bay trough 200 and the small opening couples or connects to an opening end of a standard trough 100. Like the transposition trough 300, the top casing of the reducer trough 400 typically is not made to be openable for creating a gap to vent out the increased air pressure during power arc. However, owing to cross-sectional area reduction or perpendicular slice volume reduction

(e.g., progressive cross-sectional area reduction or perpendicular slice volume reduction) of the reducer trough 400 from its large(r) opening end to the relatively small(er) opening end, it is important to avoid implosion of the reducer trough 400 around the tapering cuboid member. To mitigate high pressure which may implode or disengage the top and bottom covers of the reducer trough 400, a set of reinforcement ring structures, e.g., two steel ring structures 410, can be incorporated in some embodiments, wrapping around the length or the elongate body of the cuboid member to secure the top cover to the bottom cover for structural reinforcement if a power arc event occurs.

In some embodiments, the reducer trough 400 has an external size of 766mm (Wide) with tapering height ranging from 566mm to 716mm (High) and internal size of 750mm (Wide) x tapering height from 550mm to 700mm (High). The length of the reducer trough 400 in some embodiments can be around 1530mm to suit site situations. The reducer trough 400 can be set up using a bottom up approach, with the bottom cover engaged to the top cover followed by securing the covers by way of the Aramid band(s) and buckles as well as a set of packers to form a unified or integral reducer trough 400. The entire reducer trough 400 can be encased in a steel ring frame structure so it can better withstand an explosive power arc event. Commonly, there are two reducer trough assemblies 400 for an entire cable joint location: a left reducer trough assembly 400 on the extreme left end and a right reducer trough 400 for the extreme right end.

FIG. 15 illustrates a possible or typical multi-type trough arrangement or system 1000 corresponding to or around a joint bay location, including: a) a first / left reducer trough 400 connected to a standard trough 100 on its left (L) side or left-hand side (LHS) and a transposition trough 300 on its right (R) side or right-hand side (RHS); b) the transposition trough 300 further connecting to a joint bay trough 300 on its RHS where the cable starts to transpose; c) a joint bay trough 200 housing the cable joint for one phase cable connecting to the transposition trough 300 on both the LHS and RHS where such configuration is intuitive until a third phase cable joint bay trough assembly 200; d) the transposition trough 300 connected to the joint bay trough 200 on the LHS and another reducer trough assembly 400 on the RHS; and e) the reducer trough 400 having the transposition trough 300 on its LHS and the standard trough 100 on its RHS to complete the arrangement at the joint bay location.

### Right / Left Turn Trough Assembly

Referring to FIG. 16, a left/right turn trough 500 in a representative embodiment has an external size of 766mm (Wide) x 566mm (High) and internal size of 750mm (Wide) x 550mm (High). Such a left/right turn trough 500 can be deployed at locations where the tunnel is undergoing substantial tunnel bend(s) at a radius of around 4000 - 7000mm, typically or preferably depending upon embodiment details about 5000mm. The left/right turn trough 500 can typically include 5-8 cuboid member turn segments 501, e.g., six cuboid member turn segments 501, which can simply be referred to as turn segments (TS), to form a complete left/right turn trough 500. Each cuboid member turn segment 501 of the left/right turn trough 500 can be about 1m in length, and includes or is formed of bent or turning components that align with a portion of a bending radius of about 10 to 30 degrees, more typically or preferably 15 degrees. A right turn trough 500 or a left turn trough 500 is used when the cable needs to negotiate a significant or sharp bend. The bend radius is typically kept at about 5m, as any radius much smaller than 5m would be deemed infeasible for high-tension cables. As an example for horizontal bends, the left/right turn trough 500 can be deployed at a section where the cable comes down from the ground level passing through an adit into the cable tunnel.

### Upward / Downward Bend Trough Assembly

Referring to FIG. 17, a representative embodiment of an upward / downward bend trough 600 is shown. Some embodiments have an external size of 766mm (Wide) x 566mm (High) and internal size of 750mm (Wide) x 550mm (High). Upward/downward bend troughs 600 can be deployed at locations where the cable enters the tunnel shaft from ground level, or the cable enters the tunnel from a vertical shaft. The upward / downward bend trough 600 are used when the cable needs to negotiate a significant or sharp vertical bend. Typically or preferably, some embodiments have a bend about a radius of 4500 - 7000mm, more typically or preferably about 5000mm. One or each of the upward / downward bend troughs 600 may comprise 5 - 7, typically or preferably 6, up / down cuboid member segments 601, which can be referred to as U/D segments 601 to negotiate the bend. Each such segment 601 is about 1m in length, and includes or is formed from upwardly / downwardly bent components shaped to align with a portion of a bend radius, which is typically or preferably kept at about 5m as any radius much smaller than 5m may be less feasible or infeasible for the high-tension cables. A deployment situation can occur when the segment of the cable comes down from the cable gallery level passing through the vertical shaft, and/or the adit into the cable tunnel.

### Reduced Height Trough Assembly

FIG. 18 shows a representative embodiment of a reduced height trough 700. Some embodiments have an external size of 860mm (Wide) x 466mm (High) and an internal size of 844mm (Wide) x 450mm (High). The reduced height trough 700 can be used at locations where there is limited space, e.g., limited head room, that makes standard trough use difficult or impossible. Like the reducer trough 400, in at least some embodiments the reduced height trough 700 need not or does not typically include the pressure venting structures for managing the occurrence of a power arc event. The cables and/or cooling pipe(s) residing in a reduced height trough 700 can be spatially organized or arranged in a space-efficient manner that is different than in a standard trough 100.

It should be noted that the above examples of various types of troughs or trough assemblies provided herein are representative, and not exhaustive in scope.

## Claims

1. A cable trough (100) system comprising:
a first plurality of cuboid members, each cuboid member comprising a top casing (1) and a bottom casing (2) joined to form an elongate body encompassing a hollow cavity that is accessible from a front opening and a back opening respectively located at a front end and a back end of the cuboid member, each of the first plurality of cuboid members connected in tandem or series with each other such that the back opening of one cuboid member resides adjacent to the front opening of a next cuboid member at an interface or joint where two adjacent cuboid members are coupled;
a plurality of top bracket (4) and bottom bracket (5) pairs, wherein for each top bracket (4) and bottom bracket (5) pair the top bracket (4) and bottom bracket (5) is respectively secured or fastened to a joint where edges of the top casing (1) and edges of the bottom casing (2) of two adjacent cuboid members meet; and
a plurality of belts (10) and corresponding buckles, each belt (10) slidably engageable with its corresponding buckle, each belt (10) comprising a fabric having one end engaged to its corresponding buckle and another end insertable to the buckle, each buckle including an outer frame carrying one or more crossbars to catch against the belt (10) for strapping and securing the belt (10) around the elongate body of a cuboid member and securing the top casing (1) to the bottom casing (2) thereof, wherein each buckle is configured to allow its corresponding belt (10) to slide out of the buckle a limited distance permitting at least some upward lifting of the top casing (1) of a cuboid member away from the bottom casing (2) thereby creating a gap for discharging increased air pressure within the hollow cavity in the occurrence of a fire or explosive incident within the hollow cavity when the increased air pressure reaches or exceeds a predetermined level, threshold, or value; and
a protective sheet (9) placed within the cavity overlaying the joint of two adjacent cuboid members at each bottom casing (2), wherein the protective sheet (9) is configured for at least partially absorbing a force or impact directed toward the joint due to the increased air pressure.

2. The cable trough (100) system of claim 1, wherein the crossbar and/or the outer frame of each buckle includes knurling, knurled structures, and/or protrusions to control an amount of friction imposed by the buckle against the belt (10) corresponding thereto, and react or progressively react against the belt (10) sliding out of the buckle in response to increased air pressure.

3. The cable trough (100) system of claim 1, further comprising for each belt (10) strapped around the cuboid member a cushioning component, element, or structure disposed between the top casing (1) and part of the belt (10) strapped around the cuboid member, for partially absorbing an impact caused by the increased air pressure.

4. The cable trough (100) system of claim 1, wherein each of the top casing (1) and the bottom casing (2) of each cuboid member is substantially U-shaped and provides a planar panel coupled to a first and a second elongate side respectively folded into a first and a second vertically extending sidewall, wherein the first sidewall has a greater spatial extent along a vertical axis than the second sidewall, wherein each sidewall is coupled to or terminates at an elongated edge running lengthwise along the cuboid member, wherein the elongated edge of each of the first sidewall and the second sidewall of the top casing (1) is fashioned to respectively couple to the elongated edge of the second sidewall and first sidewall of the bottom casing (2) to form the cuboid member.

5. The cable trough (100) system of claim 4, further comprising a pair of panel edge clips for coupling the elongate edges of the top casing (1) to the elongate edges of the bottom casing (2).

6. The cable trough (100) system of claim 5, further comprising a pair of H-clips, wherein each H-clip comprises a strip running lengthwise corresponding to the elongate edge of the top casing (1) and bottom casing (2) defining a top groove and a bottom groove for separately accommodating the elongate edge of and to thereby intercouple the top and bottom casings (2).

7. The cable trough (100) system of claim 6, further comprising multiple guiding elements spaced along and arranged in pairs disposed on opposing sidewalls of the bottom casing (2), each of the guiding elements comprising a pair of opposing arms stretching upward away from the sidewalls of the bottom casing (2) with one of the arms mounted on an external surface of the sidewall and another arm mounted on an internal surface of the sidewall, each pair of opposing arms creating a slot in which one of the sidewalls of the top casing (1) is insertable, such that the pair of opposing arms is configured to guide the top casing (1) to recouple with the bottom casing (2) after lifting of the top casing (1) away from the bottom casing (2) in response to increased air pressure.

8. The cable trough (100) system of claim 7, wherein the opposing arms of the guiding elements outstretch the H-clip along the vertical axis.

9. The cable trough (100) system of claim 7, wherein each pair of guiding elements is wrapped towards the cuboid member by one of the belts (10).

10. The cable trough (100) system of claim 1, wherein for two adjacent cuboid members, the pair of top and bottom brackets (5) fastened to the joint stretches over the edges of the two adjacent cuboid members, concealing or overlaying a planar gap between the two adjacent cuboid members.

11. The cable trough (100) system of claim 6, further comprising at least one support positioned within the hollow cavity of each cuboid member, each support comprising a substantially rigid slat expanding across portions the cavity from one sidewall toward another sidewall of the bottom casing (2), and shaped for carrying a set of cooling pipes running within the cavity along the connected cuboid members, and separating the cooling pipes from one or more cables running underneath the support.

12. The cable trough (100) system of claim 11, wherein each support further comprises two downwardly reaching legs which, together with the slat, forms an n-shaped structure.

13. The cable trough (100) system of claim 12, wherein each support carries a one or more indentations on the slat for guiding, holding, or securing the cooling pipe on the support.

14. The cable trough (100) system of claim 12, wherein each leg terminates in or into two parallel prongs with a more outwardly located prong being insertable into a top groove for anchoring the support onto an H-clip.

15. The cable trough (100) system of claim 1 further comprising a set of band packers disposed under a particular segment of each of the plurality of belts (10) allow the top cover to move up slightly during the explosive incident.

16. The cable trough (100) system of claim 1, wherein the protective sheet (9) comprises two L-shaped frames, wherein each frame has a vertical segment and a horizontal segment respectively overlaying onto the sidewall and the planar panel of a bottom casing (2), and wherein the two L-shaped frames mate at the edge of the horizontal segment to form the protective sheet (9).

17. The cable trough (100) system of claim 1, wherein each of the plurality of belts (10) is spaced equidistant along each cuboid member.

18. The cable trough (100) system of claim 1, wherein each cuboid member has one of the plurality of belts (10) strapped proximate to the joint.

19. The cable trough (100) system of claim 1, wherein the top casing (1) of each cuboid member is detachable from the bottom casing (2) permitting access to the cavity upon removal of the top bracket (4) and belts (10).

20. The cable trough (100) system of claim 1, wherein the belt (10) comprises an explosive force absorbent / resilient / resistant polymer fiber band.

21. The cable trough (100) system of claim 1, further comprising a thermal-resistant sheet wrapped around at least one of the cuboid members or the joint of two adjacent cuboid members.

22. The cable trough (100) system of claim 1, further comprising a water resistant and flame resistant material or fabric wrapped around at least one of the cuboid members or the joint of two adjacent cuboid members.

23. The cable trough (100) system of claim 1, wherein the first plurality of cuboid members includes a first terminal cuboid member, and wherein the cable trough (100) system further comprises one of:
(a) a second cuboid member structure coupled to the first terminal cuboid member of the first plurality of cuboid members, wherein the second cuboid member structure has a larger opening end, a smaller opening end, and a length therebetween along which a perpendicular cross-sectional area changes between the larger opening end and the smaller opening end, and wherein one of the larger opening end and the smaller opening end is coupled to the front opening of the first terminal cuboid member of the first plurality of cuboid members; and
(b) a third cuboid member structure comprising a plurality of cuboid member segments (601) configured for curving or bending in one of a leftward, a rightward, an upward, and a downward direction, wherein a terminal cuboid member segment (601) of the third cuboid member structure is coupled to the first terminal cuboid member of the first plurality of cuboid members.

24. The cable trough (100) system of claim 1, wherein each of the first plurality of cuboid members has a first cross-sectional area perpendicular to a length of each of the first plurality of cuboid members, wherein the first plurality of cuboid members includes a first terminal cuboid member, and wherein the cable trough (100) system further comprises:
(a) a second cuboid member structure coupled to the first terminal cuboid member of the first plurality of cuboid members, wherein the second cuboid member structure has a larger opening end, a smaller opening end, and a length therebetween along which a perpendicular cross-sectional area changes between the larger opening end and the smaller opening end, and wherein one of the larger opening end and the smaller opening end is coupled to the front opening of the first terminal cuboid member of the first plurality of cuboid members; and
(b) a third plurality of cuboid members, wherein each of the third plurality of cuboid members has a third cross-sectional area different than the first cross sectional area, and wherein a terminal cuboid member of the third plurality of cuboid members is coupled to the other of the larger opening and the smaller opening end of the second cuboid member structure.

## Patentansprüche

1. Kabelkanalsystem (100), umfassend:
eine erste Mehrzahl quaderförmiger Elemente, wobei jedes quaderförmige Element ein oberes Gehäuse (1) und ein unteres Gehäuse (2) umfasst, die miteinander verbunden sind, um einen länglichen Körper zu bilden, der einen Hohlraum einschließt, der über eine vordere Öffnung und eine hintere Öffnung zugänglich ist, die sich jeweils an einem vorderen Ende bzw. einem hinteren Ende des quaderförmigen Elements befinden, wobei jedes der ersten Mehrzahl quaderförmiger Elemente im Tandem oder in Reihe miteinander verbunden ist, so dass die hintere Öffnung eines quaderförmigen Elements an der vorderen Öffnung eines nächsten quaderförmigen Elements an einer Schnittstelle oder Verbindungsstelle anliegt, an der zwei benachbarte quaderförmige Elemente miteinander verbunden sind;
eine Mehrzahl von Paaren aus oberer Halterung (4) und unterer Halterung (5), wobei für jedes Paar aus oberer Halterung (4) und unterer Halterung (5) die obere Halterung (4) und die untere Halterung (5) jeweils an einer Verbindungsstelle befestigt oder fixiert sind, an der die Kanten des oberen Gehäuses (1) und des unteren Gehäuses (2) zweier benachbarter quaderförmiger Elemente aufeinandertreffen; und
eine Mehrzahl von Gurten (10) und zugehörigen Schnallen, wobei jeder Gurt (10) verschiebbar mit seiner zugehörigen Schnalle in Eingriff gebracht werden kann, wobei jeder Gurt (10) ein Gewebe umfasst, dessen eines Ende mit seiner entsprechenden Schnalle in Eingriff steht und dessen anderes Ende in die Schnalle eingeführt werden kann, wobei jede Schnalle einen äußeren Rahmen umfasst, der eine oder mehrere Querstangen trägt, die an dem Gurt (10) einrasten, um den Gurt (10) um den länglichen Körper eines quaderförmigen Elements zu schnallen und zu befestigen und das obere Gehäuse (1) an seinem unteren Gehäuse (2) zu befestigen, wobei jede Schnalle so konfiguriert ist, dass ihr entsprechender Gurt (10) um eine begrenzte Strecke aus der Schnalle herausgleiten kann, was zumindest ein gewisses Anheben des oberen Gehäuses (1) eines quaderförmigen Elements vom unteren Gehäuse (2) nach oben ermöglicht, wodurch ein Spalt zum Ablassen eines erhöhten Luftdrucks innerhalb des Hohlraums beim Auftreten eines Feuers oder eines explosiven Vorfalls innerhalb des Hohlraums entsteht, wenn der erhöhte Luftdruck einen vorbestimmten Pegel, Schwellenwert oder Wert erreicht oder überschreitet; und
eine Schutzplatte (9), die innerhalb des Hohlraums angeordnet ist und die Verbindungsstelle zweier benachbarter quaderförmiger Elemente auf jedem unteren Gehäuse (2) überdeckt, wobei die Schutzplatte (9) derart ausgestaltet ist, dass sie zumindest teilweise eine auf die Verbindungsstelle gerichtete Kraft oder einen Stoß aufgrund des erhöhten Luftdrucks absorbiert.

2. Kabelkanalsystem (100) nach Anspruch 1, wobei die Querstrebe und/oder der Außenrahmen jeder Schnalle eine Rändelung, gerändelte Strukturen und/oder Vorsprünge aufweist, um ein Maß an Reibung zu steuern, das von der Schnalle gegen den entsprechenden Gurt (10) ausgeübt wird, und um auf erhöhten Luftdruck gegen das Herausgleiten des Gurtes (10) aus der Schnalle zu reagieren oder progressiv zu reagieren.

3. Kabelkanalsystem (100) nach Anspruch 1, wobei jedem Gurt (10), der um ein quaderförmiges Element gespannt ist, ein Dämpfungsbauteil, -element oder eine -struktur zugeordnet ist, das bzw. die zwischen dem oberen Gehäuse (1) und einem Teil des um das quaderförmige Element geschnallten Gurts (10) angeordnet ist, um einen durch den erhöhten Luftdruck verursachten Stoß teilweise zu absorbieren.

4. Kabelkanalsystem (100) nach Anspruch 1, wobei jedes obere Gehäuse (1) und jedes untere Gehäuse (2) eines quaderförmigen Elements im Wesentlichen U-förmig ist und ein flächiges Paneel sowie jeweils eine erste und eine zweite längliche Seite aufweist, die in eine erste und eine zweite vertikal verlaufende Seitenwand umgebogen sind, wobei die erste Seitenwand sich in vertikaler Richtung weiter erstreckt als die zweite Seitenwand, wobei jede Seitenwand an einer längs verlaufenden Kante endet oder mit dieser verbunden ist, wobei die längs verlaufende Kante der ersten und zweiten Seitenwand des oberen Gehäuses (1) so gestaltet ist, dass sie jeweils mit der längs verlaufenden Kante der zweiten Seitenwand und der ersten Seitenwand des unteren Gehäuses (2) verbunden ist, um das quaderförmige Element zu bilden.

5. Kabelkanalsystem (100) nach Anspruch 4, weiter umfassend ein Paar von Paneelkantenklammern zum Verbinden der längs verlaufenden Kanten des oberen Gehäuses (1) mit den längs verlaufenden Kanten des unteren Gehäuses (2).

6. Kabelkanalsystem (100) nach Anspruch 5, weiter umfassend ein Paar H-Klammern, wobei jede H-Klammer einen sich längs erstreckenden Streifen umfasst, der den längs verlaufenden Kanten des oberen Gehäuses (1) und des unteren Gehäuses (2) entspricht, um eine obere sowie eine untere Nut zu definieren, um die längs verlaufende Kante aufzunehmen und so das obere und das untere Gehäuse miteinander (2) zu verbinden.

7. Kabelkanalsystem (100) nach Anspruch 6, weiter umfassend mehrere Führungselemente, die paarweise entlang gegenüberliegender Seitenwände des unteren Gehäuses (2) angeordnet sind, wobei jedes Führungselement ein Paar gegenüberliegender Arme umfasst, die sich von der jeweiligen Seitenwand des unteren Gehäuses (2) nach oben erstrecken, wobei ein Arm an der Außenseite und der andere an der Innenseite der Seitenwand montiert ist, wobei jedes Paar gegenüberliegender Arme einen Schlitz bildet, in den eine der Seitenwände des oberen Gehäuses (1) einführbar ist,
sodass das Paar gegenüberliegender Arme dazu ausgestaltet ist, dass es das obere Gehäuse (1) so führt, dass es sich nach dem Anheben des oberen Gehäuses (1) vom unteren Gehäuse (2) als Reaktion auf einen erhöhten Luftdruck wieder mit dem unteren Gehäuse (2) verbindet.

8. Kabelkanalsystem (100) nach Anspruch 7, wobei sich die gegenüberliegenden Arme der Führungselemente entlang der vertikalen Achse über die H-Klammer hinaus erstrecken.

9. Kabelkanalsystem (100) nach Anspruch 7, wobei jedes Paar der Führungselemente von einem der Gurte (10) in Richtung des quaderförmigen Elements umschlungen wird.

10. Kabelkanalsystem (100) nach Anspruch 1, wobei sich bei zwei benachbarten quaderförmigen Elementen das Paar der oberen und unteren Halterungen (5), die an der Verbindung befestigt sind, über die Kanten der beiden benachbarten quaderförmigen Elemente erstreckt und einen ebenen Spalt zwischen den beiden benachbarten quaderförmigen Elementen verdeckt oder überlagert.

11. Kabelkanalsystem (100) nach Anspruch 6, weiter umfassend mindestens eine Stütze, die innerhalb des Hohlraums jedes quaderförmigen Elements positioniert ist, wobei jede Stütze einen im Wesentlichen starren Steg umfasst, der sich über Teile des Hohlraums von einer Seitenwand zu einer anderen Seitenwand des unteren Gehäuses (2) erstreckt und so geformt ist, dass er einen Satz von Kühlrohren trägt, die innerhalb des Hohlraums entlang der verbundenen quaderförmigen Elemente verlaufen, und die Kühlrohre von einem oder mehreren Kabeln trennt, die unterhalb des Trägers verlaufen.

12. Kabelkanalsystem (100) nach Anspruch 11, wobei jede Stütze zwei nach unten verlaufende Beine aufweist, die zusammen mit dem Steg eine n-förmige Struktur bilden.

13. Kabelkanalsystem (100) nach Anspruch 12, wobei jede Stütze eine oder mehrere Vertiefungen im Steg zum Führen, Halten oder Sichern des Kühlrohrs auf der Stütze aufweist.

14. Kabelkanalsystem (100) nach Anspruch 12, wobei jedes Bein in zwei parallele Zinken endet, wobei der weiter außenliegende Zinken in eine obere Nut zur Verankerung der Stütze in einer H-Klammer eingesetzt werden kann.

15. Kabelkanalsystem (100) nach Anspruch 1, weiter umfassend eine Mehrzahl von Bandunterlagen, die unter einem bestimmten Abschnitt jedes der mehreren Gurte (10) angeordnet sind **und** ein leichtes Anheben der oberen Abdeckung während eines Explosionsereignisses ermöglichen.

16. Kabelkanalsystem (100) nach Anspruch 1, wobei die Schutzplatte (9) zwei L-förmige Rahmen umfasst, wobei jeder Rahmen einen vertikalen Abschnitt **und** einen horizontalen Abschnitt aufweist, die jeweils die Seitenwand **und** das flächige Paneel eines unteren Gehäuses (2) überdecken, **und** wobei die beiden L-förmigen Rahmen an den Rändern der horizontalen Abschnitte miteinander verbunden sind, um die Schutzplatte (9) zu bilden.

17. Kabelkanalsystem (100) nach Anspruch 1, wobei jeder der mehreren Gurte (10) in gleichen Abständen entlang eines jeden quaderförmigen Elements angeordnet ist.

18. Kabelkanalsystem (100) nach Anspruch 1, wobei jedes quaderförmige Element einen der mehreren Gurte (10) aufweist, die in der Nähe der Verbindungsstelle befestigt sind.

19. Kabelkanalsystem (100) nach Anspruch 1, wobei das obere Gehäuse (1) jedes quaderförmigen Elements vom unteren Gehäuse (2) abnehmbar ist, um den Zugang zum Hohlraum nach Entfernung der oberen Halterung (4) und der Gurte (10) zu ermöglichen.

20. Kabelkanalsystem (100) nach Anspruch 1, wobei der Gurt (10) ein explosionskraftabsorbierendes / elastisches / resistentes Polymerfaserband umfasst.

21. Kabelkanalsystem (100) nach Anspruch 1, weiter umfassend eine wärmeresistente Folie, die um mindestens eines der quaderförmigen Elemente oder um die Verbindungsstelle zweier benachbarter quaderförmiger Elemente gewickelt ist.

22. Kabelkanalsystem (100) nach Anspruch 1, weiter umfassend ein wasser- und flammenbeständiges Material oder Gewebe, das um mindestens eines der quaderförmigen Elemente oder um die Verbindungsstelle zweier benachbarter quaderförmiger Elemente gewickelt ist.

23. Kabelkanalsystem (100) nach Anspruch 1, wobei die erste Mehrzahl quaderförmiger Elemente ein erstes Endelement umfasst, und wobei das Kabelkanalsystem (100) ferner umfasst:
(a) eine zweite quaderförmige Elementstruktur, die mit dem ersten Endelement der ersten Mehrzahl quaderförmiger Elemente verbunden ist, wobei die zweite quaderförmige Elementstruktur ein größeres Öffnungsende, ein kleineres Öffnungsende sowie eine dazwischenliegende Länge aufweist, entlang der sich eine senkrechte Querschnittsfläche zwischen dem größeren Öffnungsende und dem kleineren Öffnungsende ändert, und wobei eines von dem größeren Öffnungsende und dem kleineren Öffnungsende mit der vorderen Öffnung des ersten Endquaderelements der ersten Mehrzahl quaderförmiger Elemente gekoppelt ist; und
(b) eine dritte quaderförmige Elementstruktur, umfassend eine Mehrzahl von quaderförmigen Segmenten (601), die zur Krümmung in eine linksseitige, rechtsseitige, aufwärts oder abwärts gerichtete Richtung ausgelegt sind, wobei ein Endquadersegment (601) der dritten quaderförmige Elementstruktur mit dem ersten Endquaderelement der ersten Mehrzahl quaderförmiger Elemente verbunden ist.

24. Kabelkanalsystem (100) nach Anspruch 1, wobei jedes der ersten Mehrzahl der quaderförmigen Elemente eine erste Querschnittsfläche senkrecht zu einer Länge jedes der ersten Mehrzahl quaderförmiger Elemente aufweist, wobei die erste Mehrzahl quaderförmiger Elemente ein erstes Endquaderelement umfasst, und wobei das Kabelkanalsystem (100) ferner umfasst:
(a) eine zweite quaderförmige Elementstruktur, die mit dem ersten Endquaderelement der ersten Mehrzahl von Quaderelementen verbunden ist, wobei die zweite quaderförmige Elementstruktur ein größeres Öffnungsende, ein kleineres Öffnungsende und eine Länge dazwischen aufweist, entlang derer sich eine senkrechte Querschnittsfläche zwischen dem größeren Öffnungsende und dem kleineren Öffnungsende ändert, und wobei entweder das größere Öffnungsende oder das kleinere Öffnungsende mit der vorderen Öffnung des ersten Endquaderelements der ersten Mehrzahl quaderförmiger Elemente verbunden ist; und
(b) eine dritte Mehrzahl von quaderförmigen Elementen, wobei jedes der dritten Mehrzahl von quaderförmigen Elementen eine dritte Querschnittsfläche aufweist, die sich von der ersten Querschnittsfläche unterscheidet, und wobei ein abschließendes quaderförmiges Element der dritten Mehrzahl von quaderförmigen Elementen mit dem anderen Ende der größeren Öffnung oder dem Ende der kleineren Öffnung der zweiten quaderförmigen Elementstruktur verbunden ist.

## Revendications

1. Système de chemin de câbles (100) comprenant :
une première pluralité d'éléments parallélépipédiques, chaque élément parallélépipédique comprenant une enveloppe supérieure (1) et une enveloppe inférieure (2) assemblées pour former un corps allongé entourant une cavité creuse accessible par une ouverture avant et une ouverture arrière respectivement situées à une extrémité avant et à une extrémité arrière de l'élément parallélépipédique, chacun de la première pluralité d'éléments parallélépipédiques étant connectés en tandem ou en série les uns aux autres de sorte que l'ouverture arrière d'un élément parallélépipédique soit adjacente à l'ouverture avant d'un élément parallélépipédique suivant au niveau d'une interface ou d'un joint où deux éléments parallélépipédiques adjacents sont connectés ;
une pluralité de paires d'attache supérieur (4) et d'attache inférieur (5), sachant que pour chaque paire d'attache supérieur (4) et d'attache inférieur (5), l'attache supérieure (4) et l'attache inférieure (5) sont respectivement fixées ou attachées à un joint où les bords de l'enveloppe supérieure (1) et les bords de l'enveloppe inférieure (2) de deux éléments parallélépipédiques adjacents se rejoignent ; et
une pluralité de sangles (10) et de boucles correspondantes, chaque sangle (10) pouvant être engagée de manière glissante avec sa boucle correspondante, chaque sangle (10) comprenant un tissu ayant une extrémité engagée dans sa boucle correspondante et une autre extrémité pouvant être insérée dans la boucle, chaque boucle comprenant un cadre extérieur portant une ou plusieurs barres transversales s'accrochant à la sangle (10) pour attacher et fixer la sangle (10) autour du corps allongé d'un élément parallélépipédique et pour fixer l'enveloppe supérieure (1) à l'enveloppe inférieure (2) dudit élément, chaque boucle étant conçue pour permettre à la sangle (10) correspondante de glisser hors de la boucle sur une distance limitée, ce qui permet au moins un certain soulèvement de l'enveloppe supérieure (1) d'un élément parallélépipédique pour l'éloigner de l'enveloppe inférieure (2), créant ainsi un interstice pour évacuer la pression d'air accrue à l'intérieur de la cavité creuse en cas d'incendie ou d'incident explosif dans la cavité creuse, lorsque l'augmentation de la pression d'air atteint ou dépasse un niveau, un seuil ou une valeur prédéterminé(e); et
une feuille de protection (9) placée à l'intérieur de la cavité et recouvrant le joint de deux éléments parallélépipédiques adjacents au niveau de chaque enveloppe inférieure (2), la feuille de protection (9) étant conçue pour absorber au moins partiellement une force ou un impact dirigé(e) vers le joint en raison de l'augmentation de la pression d'air.

2. Système de chemin de câbles (100) selon la revendication 1, dans lequel la barre transversale et/ou le cadre extérieur de chaque boucle comprend des moletages, des structures moletées et/ou des saillies pour contrôler une quantité de friction imposée par la boucle sur la sangle (10) qui lui correspond, et pour réagir ou réagir progressivement à l'encontre du glissement de la sangle (10) hors de la boucle en réponse à une augmentation de la pression de l'air.

3. Système de chemin de câbles (100) selon la revendication 1, comprenant en outre, pour chaque sangle (10) attachée autour de l'élément parallélépipédique, un composant, un élément ou une structure de rembourrage disposé(e) entre l'enveloppe supérieure (1) et une partie de la sangle (10) attachée autour de l'élément parallélépipédique, pour absorber partiellement un impact causé par l'augmentation de la pression de l'air.

4. Système de chemin de câbles (100) selon la revendication 1, dans lequel l'enveloppe supérieure (1) et l'enveloppe inférieure (2) de chaque élément parallélépipédique sont sensiblement en forme de U et fournissent un panneau plan connecté à une première et une deuxième face allongés respectivement pliée en une première et une deuxième paroi latérale s'étendant verticalement, sachant que la première paroi latérale présente, le long d'un axe vertical, une extension spatiale plus grande que celle de la deuxième paroi latérale, chaque paroi latérale est connectée à ou se termine par un bord allongé s'étendant dans le sens de la longueur le long de l'élément parallélépipédique, le bord allongé de la première paroi latérale et de la deuxième paroi latérale de l'enveloppe supérieure (1) est formé de manière à se connecter respectivement au bord allongé de la deuxième paroi latérale et de la première paroi latérale de l'enveloppe inférieure (2) afin de constituer l'élément parallélépipédique.

5. Système de chemin de câbles (100) selon la revendication 4, comprenant en outre une paire de clips de bord de panneau pour connecter les bords allongés de l'enveloppe supérieure (1) aux bords allongés de l'enveloppe inférieure (2).

6. Système de chemin de câbles (100) selon la revendication 5, comprenant en outre une paire de clips en H, chaque clip en H comprenant une bande qui s'étend dans le sens de la longueur et qui correspond au bord allongé de l'enveloppe supérieure (1) et de l'enveloppe inférieure (2) pour définir une rainure supérieure et une rainure inférieure pour loger séparément les bords allongés des enveloppes supérieure et inférieure (2) afin d'interconnecter celles-ci.

7. Système de chemin de câbles (100) selon la revendication 6, comprenant en outre de multiples éléments de guidage espacés et disposés par paires sur les parois latérales opposées de l'enveloppe inférieure (2), chacun des éléments de guidage comprenant une paire de bras opposés s'étendant vers le haut à partir des parois latérales de l'enveloppe inférieure (2), l'un des bras étant monté sur une surface externe de la paroi latérale et l'autre bras étant monté sur une surface interne de la paroi latérale, chaque paire de bras opposés créant une fente dans laquelle l'une des parois latérales de l'enveloppe supérieure (1) peut être insérée, de sorte que la paire de bras opposés est conçue pour guider l'enveloppe supérieure (1) afin qu'elle se reconnecte à l'enveloppe inférieure (2) après le soulèvement de l'enveloppe supérieure (1) par rapport à l'enveloppe inférieure (2) en réponse à une augmentation de la pression de l'air.

8. Système de chemin de câbles (100) selon la revendication 7, dans lequel les bras opposés des éléments de guidage étirent le clip en H le long de l'axe vertical.

9. Système de chemin de câbles (100) selon la revendication 7, dans lequel chaque paire d'éléments de guidage est enroulée vers l'élément parallélépipédique par l'une des sangles (10).

10. Système de chemin de câbles (100) selon la revendication 1, dans lequel, pour deux éléments parallélépipédiques adjacents, la paire d'attaches supérieure et inférieure (5) fixée au joint s'étend sur les bords des deux éléments parallélépipédiques adjacents en dissimulant ou recouvrant un interstice plan entre les deux éléments parallélépipédiques adjacents.

11. Système de chemin de câbles (100) selon la revendication 6, comprenant en outre au moins un support positionné à l'intérieur de la cavité creuse de chaque élément parallélépipédique, chaque support comprenant une latte sensiblement rigide s'étendant à travers des portions de la cavité d'une paroi latérale vers une autre paroi latérale de l'enveloppe inférieure (2), et formé pour porter un ensemble de tuyaux de refroidissement s'étendant à l'intérieur de la cavité le long des éléments parallélépipédiques connectés, et séparant les tuyaux de refroidissement d'un ou de plusieurs câbles s'étendant sous le support.

12. Système de chemin de câbles (100) selon la revendication 11, dans lequel chaque support comprend en outre deux pieds orientés vers le bas qui, avec la latte, forment une structure en forme de n.

13. Système de chemin de câbles (100) selon la revendication 12, dans lequel chaque support présente une ou plusieurs indentations sur la latte pour guider, maintenir ou fixer le tuyau de refroidissement sur le support.

14. Système de chemin de câbles (100) selon la revendication 12, dans lequel chaque pied se termine par ou dans deux broches parallèles dont une broche située plus à l'extérieur peut être insérée dans une rainure supérieure pour ancrer le support sur un clip en H.

15. Système de chemin de câbles (100) selon la revendication 1, comprenant en outre un ensemble de garnitures de bande disposées sous un segment particulier de chacune de la pluralité de sangles (10) pour permettre au couvercle supérieur de se déplacer légèrement vers le haut pendant l'incident explosif.

16. Système de chemin de câbles (100) selon la revendication 1, dans lequel la feuille de protection (9) comprend deux cadres en forme de L, chaque cadre comprenant un segment vertical et un segment horizontal respectivement superposés à la paroi latérale et au panneau plan d'une enveloppe inférieure (2), et les deux cadres en forme de L s'engagent au bord du segment horizontal pour former la feuille de protection (9).

17. Système de chemin de câbles (100) selon la revendication 1, dans lequel chacune de la pluralité de sangles (10) est équidistante le long de chaque élément parallélépipédique.

18. Système de chemin de câbles (100) selon la revendication 1, dans lequel chaque élément parallélépipédique comprend l'une de la pluralité de sangles (10) attachée à proximité du joint.

19. Système de chemin de câbles (100) selon la revendication 1, dans lequel l'enveloppe supérieure (1) de chaque élément parallélépipédique est détachable de l'enveloppe inférieure (2), ce qui permet d'accéder à la cavité lors du retrait de l'attache supérieure (4) et des sangles (10).

20. Système de chemin de câbles (100) selon la revendication 1, dans lequel la sangle (10) comprend une bande de fibre polymère absorbant la force explosive / résiliente / résistante.

21. Système de chemin de câbles (100) selon la revendication 1, comprenant en outre une feuille thermorésistante enroulée autour d'au moins un des éléments parallélépipédiques ou du joint de deux éléments parallélépipédiques adjacents.

22. Système de chemin de câbles (100) selon la revendication 1, comprenant en outre un matériau ou un tissu résistant à l'eau et aux flammes et enroulé autour de l'un au moins des éléments parallélépipédiques ou du joint de deux éléments parallélépipédiques adjacents.

23. Système de chemin de câbles (100) selon la revendication 1, dans lequel la première pluralité d'éléments parallélépipédiques comprend un premier élément parallélépipédique terminal, et le système de chemin de câbles (100) comprend en outre l'un des éléments suivants :
(a) une deuxième structure d'élément parallélépipédique connectée au premier élément parallélépipédique terminal de la première pluralité d'éléments parallélépipédiques, sachant que la deuxième structure d'élément parallélépipédique présente une extrémité d'ouverture plus grande, une extrémité d'ouverture plus petite et une longueur entre elles le long de laquelle une zone de section transversale perpendiculaire change entre l'extrémité d'ouverture plus grande et l'extrémité d'ouverture plus petite, et que l'une de l'extrémité d'ouverture plus grande et de l'extrémité d'ouverture plus petite est connectée à l'ouverture avant du premier élément parallélépipédique terminal de la première pluralité d'éléments parallélépipédiques ; et
(b) une troisième structure d'élément parallélépipédique comprenant une pluralité de segments d'élément parallélépipédique (601) conçus pour se courber ou se plier dans l'une des directions suivantes : vers la gauche, vers la droite, vers le haut et vers le bas, sachant qu'un segment d'élément parallélépipédique terminal (601) de la troisième structure d'élément parallélépipédique est connecté au premier élément parallélépipédique terminal de la première pluralité d'éléments parallélépipédiques.

24. Système de chemin de câbles (100) selon la revendication 1, dans lequel chacun de la première pluralité d'éléments parallélépipédiques présente une première zone de section transversale perpendiculaire à une longueur de chacun de la première pluralité d'éléments parallélépipédiques, et la première pluralité d'éléments parallélépipédiques comprend un premier élément parallélépipédique terminal, et le système de chemin de câbles (100) comprend en outre :
(a) une deuxième structure d'élément parallélépipédique connectée au premier élément parallélépipédique terminal de la première pluralité d'éléments parallélépipédiques, sachant que la deuxième structure d'élément parallélépipédique présente une extrémité d'ouverture plus grande, une extrémité d'ouverture plus petite et une longueur entre elles le long de laquelle une zone de section transversale perpendiculaire change entre l'extrémité d'ouverture plus grande et l'extrémité d'ouverture plus petite, et que l'une de l'extrémité d'ouverture plus grande et de l'extrémité d'ouverture plus petite est connectée à l'ouverture avant du premier élément parallélépipédique terminal de la première pluralité d'éléments parallélépipédiques ; et
(b) une troisième pluralité d'éléments parallélépipédiques, chaque élément de la troisième pluralité d'éléments parallélépipédiques présentant une troisième zone de section transversale différente de la première zone de section transversale, et un élément parallélépipédique terminal de la troisième pluralité d'éléments parallélépipédiques étant connecté à l'autre de l'extrémité d'ouverture plus grande et de l'extrémité d'ouverture plus petite de la deuxième structure d'éléments parallélépipédiques.
